# FASCICULE DE BREVET EUROPEEN

(11) **EP 1 180 492 B1**
(45) Date de publication et mention de la délivrance du brevet: **29.10.2003**
(21) Numéro de dépôt: 01402142.2
(22) Date de dépôt: 08.08.2001
(51) Int. Cl.: B67D 5/62

(54) **Conteneur de récupération d'huiles alimentaires usagées**
Sammelbehälter für gebrauchtes Küchenöl
Container for recovering waste cooking oil

(30) Priorité: 16.08.2000 FR 0010655
(43) Date de publication de la demande: 20.02.2002
(73) Titulaire: Atuser SARL, 92200 Neuilly sur Seine (FR)
(72) Inventeur: Muleris, Jean-Jaques, 92200 Neuilly sur Seine (FR); Martin, Wilfried, 31000 Toulouse (FR)
(74) Mandataire: Debay, Yves

(56) Documents cités:
- GB-A- 2 165 562
- US-A- 4 148 729
- US-A- 5 609 193
- US-A- 5 717 817
- US-A- 5 823 097

## Description

La présente invention concerne un conteneur de récupération d'huile alimentaire usagée en vue de son stockage dans des conditions optimisant le recyclage.

Il est connu dans l'art antérieur des moyens permettant de stocker l'huile alimentaire usagée utilisée notamment pour la cuisson dans la restauration rapide. Ces moyens sont constitués de simples fûts d'environ 200 litres dans lesquels est versée l'huile alimentaire encore chaude par l'intermédiaire, par exemple, d'une pompe à main ou bien par transvasement à main. Ensuite, périodiquement, ces fûts sont remplacés par des fûts vides. Les fûts pleins sont ensuite acheminés vers une usine de retraitement. L'inconvénient majeur de cette technique est qu'elle nécessite une manutention' fréquente des fûts, d'où la nécessité de libérer un espace de stockage et d'utiliser des moyens de levage. De plus, elle nécessite le déplacement d'une quantité importante d'huile à haute température (environ 165°C) jusqu'à la zone de stockage des fûts, ce qui représente des risques lors de la manipulation. Enfin, elle ne garantit pas une traçabilité amont et aval de l'huile usagée.

En particulier, il est connu par le brevet américain US 5 823 097 un conteneur de récupération d'huiles alimentaires usagées comprenant une cuve fermée de volume déterminé. Cette cuve comporte sur le dessus une conduite de remplissage de l'huile usagée, passant à travers une pompe munie d'un broyeur, une conduite de vidange par aspiration de l'huile et un évent. Une extrémité de la conduite de vidange est située à proximité du fond, qui est incliné pour amener l'huile vers cette extrémité de la conduite de vidange. La cuve comporte également un système d'interrupteurs à flotteur relié à un boîtier lumineux, permettant d'informer l'opérateur du niveau de l'huile dans la cuve, ainsi que des moyens de chauffage pour liquéfier l'huile. Les moyens de chauffage se mettent en marche automatiquement dès que le niveau d'huile atteint un niveau minimum déterminé. La présente invention a donc pour objet de pallier les inconvénients de l'art antérieur en proposant une cuve de récupération d'huile alimentaire usagée permettant de stocker l'huile dans des conditions n'entraînant pas sa dégradation et de permettre son pompage sous forme liquide et à un instant choisi sans difficulté et sans danger.

Cet objectif est atteint par un conteneur de récupération d'huile alimentaire usagée comprenant une cuve fermée de volume déterminé comprenant sur le dessus, une conduite de remplissage de l'huile usagée, une conduite de vidange par aspiration de l'huile, une extrémité de la conduite de vidange étant située à proximité du fond de la cuve, la cuve comprenant également à proximité inférieure du fond, des moyens de chauffage pour amener l'huile à une température supérieure à sa température de solidification, les moyens de chauffage étant déclenchés par des moyens de commande à un premier instant déterminé, ce premier instant étant choisi de sorte que l'huile stockée dans la cuve soit suffisamment liquide à un deuxième instant déterminé, choisi par un utilisateur, pour pouvoir être vidangée par aspiration.

Un autre but de l'invention selon la revendication 1 consiste à proposer une cuve de récupération d'huile alimentaire usagée permettant de garantir une traçabilité amont et aval de l'huile alimentaire usagée.

Cet objectif est atteint par un conteneur de récupération d'huile usagée selon la revendication 22 comprenant une conduite de vidange dont l'extrémité située à l'extérieur de la cuve comprend un connecteur de forme déterminée non standard.

Un autre but de l'invention selon la revendication 1 consiste à rendre plus facile, plus sûr et plus propre le transfert de l'huile usagée entre les appareils utilisant cette huile et le ou les conteneurs servant à stocker cette huile usagée.

Cet objectif est atteint par un conteneur selon la revendication 30 caractérisé en ce qu'il comprend au moins un bac mobile dit secondaire, comportant une cuve munie d'une ouverture de remplissage et d'une conduite d'aspiration connectée de façon amovible, par un conduit flexible ou mobile, à la cuve.

Cet objectif est également atteint par un conteneur selon la revendication 27 caractérisé en ce qu'il comporte un conduit chauffé raccordé d'un côté à l'entrée d'aspiration de la pompe ou à la conduite de remplissage et de l'autre côté à des moyens de vidange ou d'évacuation d'au moins un appareil utilisant une huile de cuisson alimentaire, ce conduit comportant des moyens de chauffage permettant de maintenir liquide l'huile circulant ou restant à l'intérieur de ce même conduit.

L'invention, avec ses caractéristiques et avantages, ressortira plus clairement à la lecture de la description faite en référence au dessin annexé dans lequel :
- la figure 1 représente un schéma en perspective d'une variante de réalisation de la cuve selon l'invention
- la figure 2 représente une vue partielle en perspective du dispositif selon l'invention, où le bac secondaire est monté sur roues et comporte une pompe manuelle de vidange ;
- la figure 3 représente une vue partielle en perspective du dispositif selon l'invention, où le bac secondaire est monté sur roues et comporte un panier de filtrage et un bouchon circulaire ;
- la figure 4 représente une vue en perspective du dispositif selon l'invention, où la cuve comporte une pompe d'aspiration et un réceptacle d'égouttage ;
- la figure 5 représente une vue en perspective du dispositif selon l'invention, où la cuve comporte un module de commande déporté et est reliée par une conduite chauffante à un appareil de cuisson utilisant de l'huile alimentaire.

Avant de décrire la cuve selon l'invention, il est nécessaire d'expliciter le contexte technique dans lequel s'inscrit la présente invention. Le problème rencontré avec le recyclage de l'huile est qu'il existe différents circuits de recyclage. Le premier est le circuit de l'alimentation animale. L'huile ayant un fort apport calorique, certains fabricants d'aliments pour animaux l'utilisent dans leur composition. Cependant, ce type de recyclage est soumis à une réglementation très stricte. En effet, la qualité de l'huile doit être irréprochable. Par conséquent, cela nécessite d'avoir la certitude que l'huile recyclée n'a pas été polluée par un quelconque produit toxique ou impropre à la consommation. En effet, cette pollution est susceptible de polluer également la viande des animaux qui ont mangé les aliments à base d'huile polluée et donc de remettre en question la qualité de la viande. Ainsi, dans le secteur de la restauration, la tendance est en fait de mettre en place un système de traçabilité amont et aval de l'huile alimentaire usagée afin de s'assurer que l'huile ne sera pas introduite dans le circuit de production des aliments utilisés par les restaurants.

Le deuxième circuit est le circuit de la production technique. Ce circuit de recyclage exige des qualités minimales de l'huile, notamment en ce qui concerne le taux d'acidité oléique.

Les contraintes de stockage et de manipulation de l'huile sont les suivantes. En règle générale, l'huile usagée se solidifie ou fige à une température ambiante de l'ordre de 20 à 30° en fonction de l'huile utilisée. Son stockage s'effectue selon l'art antérieur à l'aide de fûts à ouverture totale à remplacer périodiquement. Comme expliqué précédemment, cette technique présente des risques pour le personnel et est très contraignante en matière de stockage et de manipulation.

Du fait que l'huile peut se figer, le transfert de l'huile d'un contenant à un autre ne peut s'effectuer qu'à une température supérieure à la température de solidification. L'huile alimentaire usagée comprend également de l'eau et en présence d'une source de chaleur, cette eau provoque une fermentation qui génère une augmentation du taux d'acide oléique. Cette augmentation du taux d'acide oléique rend l'huile usagée difficile à recycler et/ou diminue sensiblement son prix de revente.

Le principe de l'invention est donc de prévoir une cuve permettant le stockage de l'huile sans dégradation de ses qualités et autorisant une vidange sous forme liquide à un instant choisi par un utilisateur.

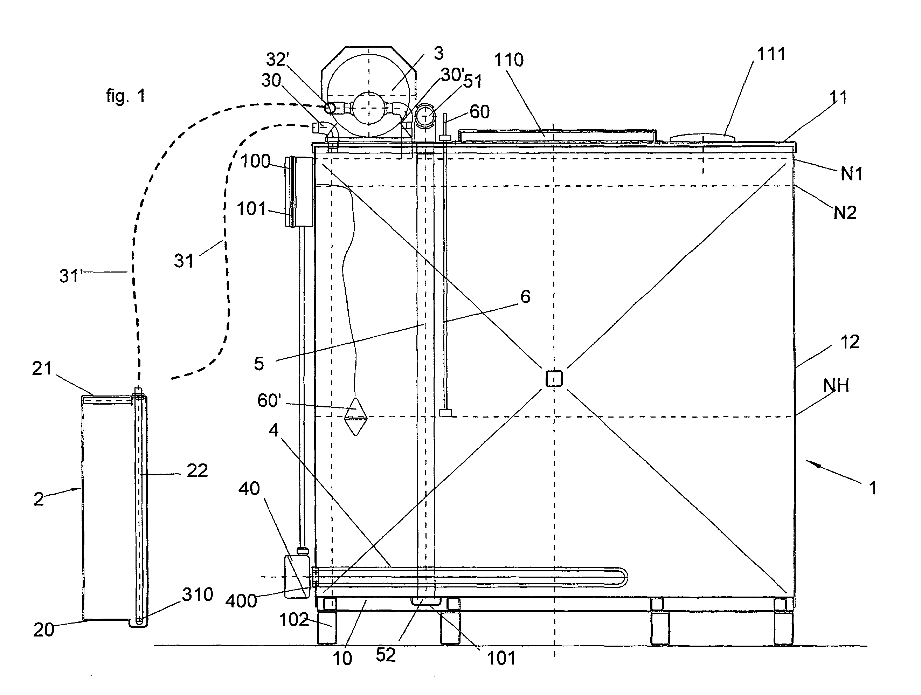

La présente invention va à présent être décrite en référence à la figure 1. La cuve (1) selon l'invention est, par exemple, de forme sensiblement parallélépipédique rectangle et comprend un fond (10) relié à un dessus (11) par des parois (12) latérales verticales. Le dessus (11) est éventuellement amovible pour permettre notamment une fabrication et une maintenance plus aisées.

Le fond de la cuve comprend une pluralité de pieds (102) de support permettant la manutention de la cuve (1) par l'intermédiaire de moyens de levage conventionnels tels qu'un transpalette ou un chariot élévateur. L'espacement des pieds sur la longueur et sur la largeur est choisi pour pouvoir utiliser un transpalette ou un chariot élévateur, soit dans le sens de la largeur de la cuve (1), soit dans le sens de longueur. Pour une utilisation du moyen de levage dans la largeur de la cuve (1), le fond (10) est de préférence renforcé.

Les dimensions de la cuve (1) sont choisies pour répondre au besoin spécifique de stockage de chaque utilisateur et aux contraintes de périodicité de la collecte.

Ainsi, à titre d'exemple, lorsque la périodicité de collecte est mensuelle et lorsque la consommation d'huile est de l'ordre de 1500 litres par mois, les dimensions de la cuve (1) peuvent être les suivantes:
- hauteur 1,40 m (hors pied)
- largeur 0,7 m
- longueur 1,5 m

Le choix de la valeur de la largeur est déterminé de façon à pouvoir manipuler la cuve dans l'embrasure d'une porte. De même la hauteur est déterminée pour qu'un opérateur puisse observer le dessus de la cuve (1) sans pouvoir y accéder facilement. D'autres dimensions peuvent être choisies en fonction notamment des capacités de stockage souhaitées et des contraintes d'implantation de la cuve (1) et pour obtenir un encombrement minimum pour une contenance maximum.

Sur le dessus (11) débouche une première conduite (30), dite de remplissage. Cette conduite (30) de remplissage comprend une première portion faisant saillie à l'extérieur de la cuve et une deuxième portion dont l'extrémité débouche à l'intérieur de la cuve selon une direction sensiblement verticale. La distance entre le fond (10) et l'extrémité libre de la deuxième portion correspond au niveau extrême (N1) au-delà duquel l'introduction d'une nouvelle quantité d'huile est interdite. Afin d'exploiter au maximum le volume intérieur de la cuve (1), la longueur de la deuxième portion de la conduite (30) de remplissage est de l'ordre de quelques centimètres pour une hauteur de cuve (1) de l'ordre de 1,40 m. Selon une variante de réalisation, la conduite (30) de remplissage est coudée, de sorte que l'axe de la première portion est sensiblement perpendiculaire à l'axe de la deuxième portion. L'extrémité libre de la première portion comprend, par exemple, un connecteur permettant de raccorder un conduit flexible ou mobile (31), d'un dispositif (non représenté) de pompage, par exemple manuel.

Selon la variante de réalisation représentée à la figure 1, la conduite de remplissage peut être remplacée ou complétée par un dispositif de pompage (3) comprenant, par exemple, une pompe électrique. Dans cette configuration, la pompe (3) est, par exemple, fixée sur le dessus (11) de la cuve (1). La sortie (30') de refoulement de la pompe (3) débouche alors dans la cuve (1). De façon similaire à la configuration sans pompe (3), et de façon à exploiter la plus grande partie du volume de la cuve (1), la longueur de la sortie de refoulement de la pompe est de l'ordre de quelques centimètres. L'entrée (32') d'aspiration de la pompe (3) comprend un connecteur permettant de raccorder un conduit flexible ou mobile (31'), c'est à dire comportant des parties mobiles, connecté par son autre extrémité à un bac (2), dit secondaire, par exemple de forme sensiblement parallélépipédique rectangle. Le bac (2) secondaire est de plus petite dimension que la cuve (1) et est destiné à faciliter le transvasement de l'huile dans la cuve (1). Ainsi, la hauteur du bac (2) secondaire est prévue pour permettre à un opérateur de déverser un récipient d'huile à la main en toute sécurité. A titre d'exemple, la hauteur du bac (2) secondaire est de l'ordre de 0,8 à 1m. Le bac (2) secondaire peut être, soit solidaire de la cuve (1), soit, tel que représenté à la figure 1, amovible par rapport à la cuve (1), de façon à amener le bac (2) au plus près des contenants remplis de l'huile à récupérer ou du lieu de récupération.

Le dessus (21) du bac (2) secondaire comprend une ouverture permettant de verser l'huile. Cette ouverture comprend, par exemple, une grille permettant de filtrer les gros déchets solides susceptibles d'avoir pollué l'huile. Cette grille peut être conformée pour pouvoir supporter le poids d'un opérateur qui utiliserait le bac (2) secondaire comme marche pied pour accéder sur le dessus de la cuve. De même, l'ouverture peut comprendre une trappe ramenée en permanence en position de fermeture par des moyens de rappel. Cette trappe évite ainsi à des débris de pénétrer dans le bac lorsqu'il n'est pas utilisé.

Le conduit (31') de raccordement à la pompe (3) est relié à une conduite (22) de vidange du bac (2) secondaire qui plonge jusqu'à proximité du fond du bac (2) de façon à aspirer la quasi-totalité de l'huile présente dans le bac (2). Le bac (2) secondaire comprend des moyens de détection (non représentés) du niveau d'huile dans le bac (2). Ces moyens de détection sont couplés à la commande de mise en service de la pompe (3), de sorte que lorsqu'un niveau déterminé d'huile est détecté dans le bac (2), un signal représentatif d'une commande de mise en marche est transmis à la pompe (3). La pompe est alors mise en marche jusqu'à ce qu'il n'y ait plus d'huile à pomper. Dès qu'il n'y a plus d'huile à pomper ou que la quantité d'huile restante n'est plus suffisante pour être pompée par la pompe (3), celle-ci s'arrête automatiquement. Dans une autre variante, dès que le niveau d'huile descend au-dessous du niveau déterminé détecté par les moyens de détection, ceux-ci transmettent un signal représentatif d'une commande d'arrêt à la pompe (3).

Dans une autre variante, afin de s'assurer que dès que de l'huile est introduite dans le bac secondaire, celle-ci sera pompée, les moyens de détection sont remplacés par des moyens de détection de présence d'huile dans le fond du bac (2) de sorte que, dès que de l'huile est introduite dans le bac (2) secondaire, la pompe (3) soit mise en marche.

Afin d'aspirer la quasi-totalité de l'huile dans le bac (2) secondaire, le fond (20) du bac secondaire comprend un bossage de forme déterminée situé en vis-à-vis de l'extrémité libre de la conduite (22) d'aspiration du bac (2). De même, le fond (20) du bac peut posséder une pente dont la partie basse comprend le bossage. Ainsi, en fin de pompage, l'huile va s'accumuler par gravité dans le bossage, de sorte que la quantité d'huile non aspirée correspondra sensiblement au volume du bossage moins la longueur de la deuxième extrémité (52) de la conduite (5) de vidange pénétrant dans le bossage. La quantité restante dans le bossage est alors négligeable.

Dans une autre variante, la conduite (22) d'aspiration du bac est remplacée par un siphon (non représenté) dont une extrémité débouche dans le fond (20) du bac et dont la deuxième extrémité est raccordée au conduit (31').

Le bac (2) secondaire peut être remplacé par tout autre moyen permettant d'amener l'huile alimentaire usagée du lieu d'utilisation, par exemple les friteuses, jusqu'à la cuve selon l'invention.

Le dessus (11) de la cuve comprend également une deuxième conduite, (5) dite de vidange, dont une première extrémité (51) débouche à l'extérieur de la cuve (1) et dont la deuxième extrémité (52) est située au voisinage du fond (10) de la cuve (1). La distance entre la deuxième extrémité (52) et le fond (10) de la cuve (1) est choisie pour permettre une aspiration de la quasi-totalité de l'huile stockée dans la cuve (1). Selon la variante de réalisation représentée à la figure 1, la deuxième extrémité (52) de la conduite (5) de vidange débouche dans un bossage (101) réalisé dans le fond (10) de la cuve (1) et formant un réceptacle. La deuxième extrémité est alors positionnée à un niveau situé en deçà du fond (10) de la cuve (1). Par conséquent, lors de la vidange de la cuve (1) par aspiration, toute l'huile, hormis une petite quantité correspondant sensiblement au volume du bossage (101) moins la profondeur d'enfoncement de la conduite (5) de vidange dans le bossage, est aspirée. Cette caractéristique permet alors de conserver une quantité négligeable d'huile dans la cuve (1). En effet, une quantité trop importante d'huile stagnant dans le fond de la cuve (1) génèrerait alors une prolifération de bactéries préjudiciable à la qualité de l'huile usagée qui serait introduite de nouveau dans la cuve (1). De même, pour améliorer l'efficacité du pompage, le fond (10) de la cuve peut comprendre au moins une pente dont la partie basse comprend le bossage (101).

Selon la variante de réalisation, le bossage est, par exemple, de forme cylindrique de diamètre supérieur au diamètre de la conduite (5) de vidange. Dans une autre variante de réalisation (non représentée) le bossage est hémisphérique.

Dans une variante de réalisation, la deuxième extrémité de la conduite (5) de vidange comprend une crépine évitant l'aspiration de déchets ou débris présent dans la cuve (1). De même, la première extrémité de la conduite de vidange peut comprendre un connecteur dont les parties d'interconnections sont de formes non-standards. Ainsi, seul un véhicule de récupération équipé d'un connecteur de forme complémentaire à celui monté sur la conduite (5) de vidange peut être raccordé à la cuve (1), ce qui permet de s'assurer que l'intermédiaire ayant effectué la collecte est un intermédiaire particulier possédant le connecteur adéquat.

Le dessus (11) comprend également une ouverture (110), appelée communément un trou d'homme, permettant notamment la maintenance des éléments (décrits ultérieurement) montés à l'intérieur de la cuve (1) et le nettoyage de la cuve (1) et/ou de la crépine.

Cette ouverture (110) est fermée par un couvercle pour éviter la pollution de l'huile, notamment par la chute d'objets ou par l'introduction d'animaux nuisibles. Le couvercle peut-être équipé de filtre pour éviter d'autres pollutions.

Le dessus (11) de la cuve (1) peut comprendre également au moins un évent (111) formant notamment une prise d'air. Cet évent (111) est, par exemple, obturé par un élément filtrant permettant de supprimer, ou tout au moins réduire, la diffusion d'odeur liée au stockage de l'huile.

Selon l'invention, la cuve (1) comprend également, dans sa partie basse, des moyens (4) de chauffage, comprenant, par exemple, au moins un ensemble d'au moins deux éléments chauffants. Ces éléments chauffants (4) sont en soi connus et sont, par exemple, des résistances électriques radiantes. Selon la variante de réalisation représentée à la figure 1, l'installation des éléments (4) chauffants est réalisée par l'intermédiaire de support (40). Le montage de chaque ensemble d'éléments chauffants dans la cuve est effectué par l'intermédiaire d'une ouverture (400) pratiquées sur l'une des parois latérales (12) de la cuve (1) à proximité inférieure du fond (10) de la cuve (1). L'ouverture (400) comprend des moyens de fixation du support (40) de l'ensemble d'éléments (4) chauffants. Ces moyens de fixation assurent également l'étanchéité de l'ouverture lorsque chaque ensemble d'éléments (4) chauffant est monté dans l'ouverture (400).

Dans une variante de réalisation non représentée, chaque élément (4) chauffant est monté à une première extrémité d'un support, par exemple, dans un plan sensiblement perpendiculaire à l'axe longitudinal du support. La deuxième extrémité du support comprend des moyens de fixation sur le dessus de la cuve au niveau du trou d'homme. Ainsi, le montage est réalisé en introduisant chaque élément dans la cuve par le trou d'homme à l'aide du support. Le support est ensuite fixé sur le dessus de la cuve (1), de sorte que l'axe longitudinal du support soit sensiblement vertical. Ainsi, à l'issue du montage, les éléments (4) chauffants sont disposés à proximité du fond de la cuve dans un plan sensiblement parallèle au fond de la cuve (1). Cette variante permet de disposer toutes les entrées sorties de la cuve (1) ainsi que les commandes de fonctionnement et les indicateurs de niveau sur le dessus (11) de la cuve (1). Par conséquent, il est possible, par l'intermédiaire de cette variante, par exemple, soit de mettre en place la cuve (1) dans un endroit ne permettant pas de dégagement latéral, soit d'enterrer la cuve (1).

La fonction essentielle des éléments (4) chauffants est de fournir à un instant déterminé et/ou pendant une durée déterminée, suffisamment d'énergie calorifique pour liquéfier toute l'huile figée et stockée dans la cuve (1) afin de permettre, à un instant choisi, la vidange par aspiration de l'huile contenue dans la cuve (1). Il est important de noter que la caractéristique essentielle de l'invention réside dans le fait que les éléments chauffants ne fonctionnent pas en permanence, ce qui évite une acidification de l'huile. Ainsi, pour pourvoir être aspirée à un instant choisi, l'huile doit être liquide. Par conséquent, les éléments chauffants (4) doivent amener, puis maintenir l'huile, à une température supérieure à la température de solidification qui est de l'ordre de 30°C, pendant une durée la plus courte possible et avec une faible différence de température avec la température de fusion de l'huile.

La mise en service des éléments (4) chauffants est assurée par des moyens de commande (non représentés) assurant, par exemple, la mise sous tension des éléments (4) chauffants. Les moyens de commande comprennent par exemple, un interrupteur manuel actionnable sur demande par un opérateur. Dans ce mode de réalisation, l'opérateur est averti de mettre en service les éléments chauffants par un centre de recyclage d'huile responsable de la collecte de l'huile, par exemple, par l'intermédiaire d'une communication téléphonique ou tous autres moyens de communication équivalents.

Dans une variante de réalisation, des témoins (101) de non-fonctionnement sont installés sur chaque élément (4) chauffant. Ces témoins peuvent être lumineux ou sonores et installés sur une surface visible de la cuve (1). Ainsi, dès qu'un des éléments chauffants ne fonctionne plus l'opérateur en est averti et peut alors demander le remplacement de l'élément défectueux. Ainsi, l'intérêt de mettre en place au moins un ensemble d'au moins deux éléments chauffants est qu'il est très peu probable que tous les éléments chauffants seront défectueux en même temps. Par conséquent, il sera toujours possible de liquéfier toute l'huile présente dans la cuve (1) et de vidanger la cuve (1) pour procéder au remplacement du ou des éléments chauffants défectueux.

Selon une variante de réalisation, les éléments chauffants sont couplés à un dispositif de régulation comprenant notamment un capteur de température, de sorte que les éléments chauffants ne sont alimentés que lorsque la température est inférieure à la température de fusion, augmentée, par exemple de 15°C, avec un écart par exemple de + ou - 5°C. Ainsi, si la température de fusion de l'huile est de 25°C, les éléments chauffants ne seront plus alimentés dès que la température de l'huile n'est plus comprise dans l'intervalle 35°C-45°C. De cette façon l'huile restera liquide jusqu'à la vidange de la cuve (1).

De même, le capteur de température peut être couplé à un afficheur, de façon à indiquer la température à un opérateur extérieur.

Afin de ne pas déclencher la mise en service des éléments (4) chauffants alors que la quantité d'huile stockée dans la cuve (1) est insuffisante, la cuve peut comprendre des moyens (60) de détection du niveau ou de la quantité d'huile stockée dans la cuve (1). En effet, pour ne pas endommager les éléments chauffants et également pour ne pas provoquer d'incendie dans la cuve (1), la mise en service des éléments chauffants est autorisée uniquement si les éléments (4) chauffants sont complètement immergés dans l'huile et/ou si la quantité d'huile présente dans la cuve (1) est suffisante pour ne pas provoquer d'incendie ou une carbonisation des éléments chauffants.

Dans une autre variante de réalisation, les moyens de détection (60) du niveau d'huile sont complétés ou remplacés par des moyens de détection (60') de la présence d'huile à un niveau minimum nécessaire qui correspond à une quantité d'huile permettant le déclenchement sans risque d'incendie des éléments (4) chauffants. Ces moyens (60') de détection de présence peuvent comprendre un capteur de présence de liquide placé à une hauteur déterminée correspondant à la quantité d'huile minimum pour autoriser le chauffage. Ce capteur (60') comprend un contacteur à bille ou a mercure placé dans un récipient étanche. Lorsque le récipient est dans sa position de repos, c'est-à-dire lorsqu'il est pas en contact avec l'huile, la bille ne fait pas contact et aucun signal de détection n'est transmis. Par contre, lorsque l'huile arrive au niveau du récipient, celui-ci bascule de sorte que la bille fait contact et indique alors la présence d'huile.

De même, afin d'éviter un chauffage prolongé de l'huile par une mise en route intempestive des éléments chauffants, des éléments de sécurité complètent les moyens de mise en service des éléments chauffants de sorte qu'ils ne puissent pas chauffer l'huile plus qu'il n'est nécessaire. En effet, comme expliqué précédemment, plus l'huile est chauffée longtemps plus son taux d'acide oléique augmente. Ainsi, les éléments chauffants (4) peuvent être couplés à une horloge ou un compte à rebours, de sorte que lorsque les éléments chauffants sont mis en marche, l'horloge ou le compte à rebours est déclenché. Dès que l'horloge indique une durée supérieure à une durée déterminée ou dès que le compte à rebours s'achève, alors l'alimentation électrique des éléments chauffants est automatiquement coupée. Ainsi, l'huile n'est pas chauffée suffisamment longtemps pour provoquer une augmentation néfaste du taux d'acide oléique. Cet élément de sécurité ne constitue pas un élément de déclenchement des éléments (4) chauffants mais constitue en fait un moyen de contrôle des éléments chauffants évitant un fonctionnement abusif des éléments (4) chauffants.

Afin de déterminer la durée maximum de chauffage de l'huile nous prendrons un exemple de cuve (1).

Soit une cuve contenant 1000 litres d'huile, équipée d'un ensemble de trois éléments chauffants délivrant au total une puissance de 3000W et considérons une température extérieure de -20°C. Dans ce cas de figure, le temps nécessaire pour défiger la totalité de l'huile est de 24h. Ainsi, pour cette cuve particulière, le compte à rebours ou l'horloge est paramétré pour couper l'alimentation électrique des éléments (4) chauffants après une durée d'au moins 24h et par exemple après une durée de 25h. Ainsi, même dans le cas où les éléments chauffants seraient mis en marche de façon inopinée, la qualité de l'huile ne sera pas altérée.

L'exemple précédent permet également de déterminer quel est le délai qui doit exister entre le moment où l'huile est vidangée et le moment où les éléments chauffants sont mis en marche.

Selon la variante de réalisation représentée à la figure 1, les moyens de détection du niveau de remplissage sont essentiellement mécaniques et comprennent un flotteur (6) monté à une première extrémité d'une tige (60) montée coulissante selon un axe sensiblement vertical à l'intérieur de la cuve (1). La deuxième extrémité de la tige (60) débouche du dessus (11) de la cuve (1). Avant l'introduction d'une nouvelle quantité d'huile dans la cuve (1), soit le flotteur (6) est posé ou pris dans la surface (NH) de l'huile si la température ambiante est inférieure à la température de fusion, soit le flotteur (6) flotte à la surface de l'huile. Lorsqu'une nouvelle quantité d'huile est ajoutée, la couche supérieure de l'huile se liquéfie sous l'effet de la chaleur emmagasinée dans l'huile ajoutée. Le flotteur (6) reste alors à la surface de l'huile nouvellement ajoutée jusqu'à ce qu'elle se fige. Par conséquent, la hauteur de la tige dépassant du dessus (11) de la cuve est représentative du niveau ou de la quantité d'huile contenue dans la cuve (1). Pour visualiser la quantité d'huile présente dans la cuve (1), des zones de couleurs différentes peuvent être appliquées sur la tige (60). A titre d'exemple, une première zone située à l'extrémité libre de la tige (60) faisant saillie du dessus (11) de la cuve (1) peut être de couleur blanche pour indiquer que le niveau d'huile n'est pas suffisant pour mettre en service les éléments (4) chauffants. Une deuxième zone située sensiblement dans la partie médiane de la tige (60) peut être de couleur bleue pour indiquer qu'il y a suffisamment d'huile pour mettre en service les éléments (4) chauffants le cas échéant. Une troisième zone de la tige (60) située au voisinage du flotteur (6) peut être de couleur rouge pour indiquer que le niveau d'huile dans la cuve (1) atteint un niveau (N2) maximum d'utilisation et qu'il est souhaitable de procéder à la vidange de la cuve (1). Enfin, une quatrième zone, située entre le flotteur et une troisième zone, peut être de couleur noire pour indiquer que le niveau (N1) maximum de remplissage est atteint et qu'il est interdit et dangereux d'ajouter de nouvelles quantités d'huile. La lecture de la couleur de la tige (60) s'effectue, par exemple, au niveau du dessus (11) de la cuve (1), par exemple, par l'intermédiaire d'un cadran.

Dans une autre variante de réalisation, la tige (60) est équipée d'un système électronique générant un signal représentatif du niveau d'huile mesuré par le flotteur. Ce signal est alors transmis à un afficheur (100) placé sur une surface extérieure visible de la cuve (1). La tige (60) peut être remplacée par tout autre dispositif mécanique d'indication de niveau, tel qu'une jauge.

Dans une autre variante de réalisation, la détermination du niveau d'huile est effectuée par un dispositif électronique à ultrasons ou à hyperfréquences, placé à l'intérieur de la cuve (1). Ce dispositif à ultrasons transmet, par exemple à un afficheur (100) placé sur une surface extérieure visible de la cuve (1), un signal représentatif du niveau atteint par l'huile. L'afficheur (100) traduit ce signal, soit en valeur numérique correspondant à la quantité, par exemple en litres, soit en un message écrit indiquant, par exemple, si l'allumage des éléments chauffants est autorisé ou bien si le chauffage est autorisé ou encore si le niveau critique est atteint.

Le dispositif électronique à ultrasons ou à hyperfréquences peut être remplacé par tout autre dispositif électronique ou mécanique indiquant ou fournissant un signal représentatif du niveau d'huile présent dans la cuve (1).

Dans une autre variante de réalisation (non représentée), les moyens de détection du niveau d'huile comprennent, d'une part sur la conduite de remplissage (30) et/ou la conduite (30') de refoulement de la pompe (3), et d'autre part sur la conduite (5) de vidange, des moyens de mesure de la quantité de fluide. Ces moyens de mesure comprennent, par exemple, un débitmètre, de sorte qu'il est possible de déterminer la quantité d'huile passant par la conduite de remplissage (30) et/ou la conduite de refoulement de la pompe (3). Les moyens de mesure de la quantité de fluide disposés sur la conduite de remplissage (30) et/ou les moyens de mesure de la quantité de fluide disposés sur la conduite (30') de refoulement, ainsi que des moyens de mesure de la quantité de fluide disposée sur la conduite (5) de vidange transmettent un signal représentatif de la quantité d'huile mesurée à un calculateur. Le calculateur réalise alors la soustraction entre la quantité entrante et la quantité sortante pour déterminer la quantité restante dans la cuve. Le calculateur transmet alors un signal représentatif du résultat de la soustraction vers un afficheur. Cette variante permet de détecter une introduction illicite de produit dans la cuve par le trou d'homme. En effet, lors de la vidange de la cuve (1), la quantité réelle de produit contenu dans la cuve (1) est mesurée par le centre de recyclage. Si cette valeur réelle est différente de la valeur calculée par le calculateur cela signifie que des produits liquides ont été ajoutés par un autre biais que la conduite (30) de remplissage ou de refoulement (30') ou si de l'huile a été retirée par un autre biais que la conduite (5) de vidange. Pour savoir si des produits ont été ajoutés ou que de l'huile a été retirée, il suffit de connaître le signe de la différence entre la quantité d'huile réelle vidangée et la quantité d'huile déterminée par le calculateur avant la vidange. Si la différence est positive cela signifie que des produits ont été ajoutés, au contraire si la différence est négative, cela signifie que de l'huile à été retirée de façon illicite.

Dans une variante de réalisation, les moyens de mesure de la quantité de fluide disposés sur la conduite (5) de vidange sont mis en place sur le véhicule de collecte de l'huile. Dans ce cas, lorsque toute l'huile a été pompée, les moyens de mesure de la quantité de fluide disposés sur la conduite (30) de remplissage ou de refoulement (30') sont initialisés. De même, dans cette variante de réalisation, les moyens de mesure de la quantité de fluide disposés sur la conduite (30) de remplissage ou de refoulement (30') indiquent la quantité introduite dans la cuve (1).

Dans une variante de réalisation, le dispositif électronique ou mécanique de détection (60) du niveau ou de présence (60') d'huile ou le calculateur peut être couplé au dispositif à l'interrupteur de mise en marche des éléments (4) chauffants au travers d'une porte logique (ET). Ainsi, la sortie de la porte logique commandant alors l'alimentation électrique des éléments (4) chauffants de sorte que l'alimentation est déclenchée uniquement si d'une part un signal représentatif de l'actionnement de l'interrupteur et d'autre part un signal représentatif du niveau d'huile correspondant au niveau (N2) minimum, sont transmis à la porte logique (ET). Cette variante de réalisation permet ainsi d'empêcher le fonctionnement des éléments chauffants lorsque le niveau d'huile est insuffisant, même lorsque l'interrupteur de mise en marche est actionné par un opérateur.

Dans une variante de réalisation (non représentée), la mise en marche des éléments chauffants est déclenchée à distance par l'intermédiaire de moyens de communication entre la cuve (1) et le centre de recyclage. Les moyens de communication sont connus en soi et comprennent, du côté de la cuve, par exemple un modem, et des moyens de collecte de données et du côté du centre de recyclage, un modem relié à un système informatique de traitement. Les moyens de collecte de données sont connectés notamment aux moyens de détection de niveau d'huile et aux moyens de mise en marche des éléments chauffants. Ainsi, sur appel téléphonique du centre de recyclage vers le modem de la cuve (1), le centre de recyclage interroge les moyens de collecte de données pour connaître la quantité d'huile présente dans la cuve (1). Les moyens de collecte de données transmettent alors, vers le système informatique du centre de recyclage, des données représentatives du niveau d'huile contenu dans la cuve (1) au moment de l'appel. Si le niveau d'huile est supérieur au niveau (NH) minimum pour la mise en marche des éléments chauffants, le centre de recyclage transmet une information représentative d'une commande de mise en marche des éléments chauffants. Sur réception de cette information, les moyens de collecte de données transmettent un signal représentatif d'une commande de mise en marche vers les éléments chauffants. Cette variante évite ainsi l'intervention d'un opérateur sur le site d'implantation de la cuve (1) et diminue par conséquent le risque d'erreurs de manipulation.

Pour compléter les informations transmises par le modem de la cuve vers le centre de recyclage, les moyens de collecte de données sont également connectés aux témoins de bon fonctionnement des éléments chauffants, à un témoin de bon fonctionnement de la pompe (3) et à un capteur de température mis en place dans la cuve (1). Ainsi, le centre de recyclage, en interrogeant périodiquement les moyens de collecte de données au travers de données, connaît l'état de fonctionnement de la cuve (1) et peut ainsi programmer de façon optimale la vidange de la cuve (1) ou une intervention de maintenance sur un élément de la cuve (1).

Dans cette variante, les dispositifs de sécurité décrits précédemment peuvent être maintenus. Ainsi, à titre d'exemple la porte logique (ET) empêchant la mise en marche des éléments (4) chauffants si le niveau d'huile est insuffisant, est conservée. De cette façon, même si une commande de mise en marche est déclenchée à distance par le centre de recyclage alors que le niveau d'huile est insuffisant, le chauffage ne sera pas déclenché.

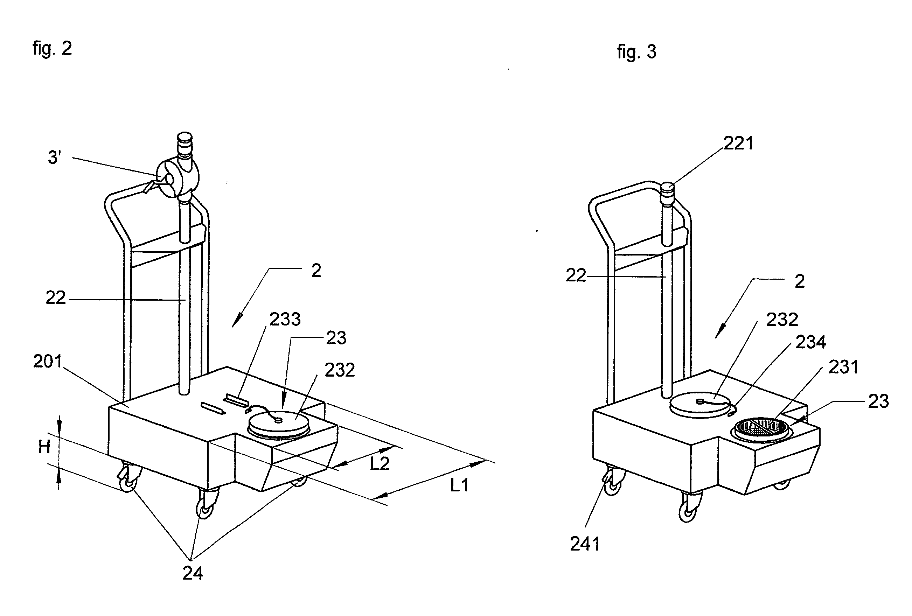

Dans un mode de réalisation représenté en figures 2 et 3, pour faciliter le transvasement entre l'appareil (F) à vidanger, par exemple un appareil de cuisson, et la cuve(1), le bac secondaire (2) est monté sur roues (24), typiquement trois ou quatre roues de façon à assurer une stabilité permanente et à ne pas nécessiter de déséquilibre pour le roulage. De façon à faciliter la manoeuvre du bac secondaire (2), certaines de ces roues sont des roues multidirectionnelles d'un type connu, c'est à dire qu'elles s'orientent d'elles mêmes en fonction de la direction du déplacement ou de la poussée. Le nombre de ces roues multidirectionnelles est par exemple de deux sur quatre, ou une sur trois, ou la totalité d'entre elles Ce bac secondaire (2) comprend alors une cuve (201) munie d'une ouverture (23) de remplissage, par exemple située dans sa partie supérieure et s'ouvrant vers le haut, permettant de recueillir les huiles usagées depuis un récipient manuel, ou par un tuyau d'évacuation venant d'un appareil (F) à vidanger, ou en positionnant cette ouverture (23) de remplissage directement sous une conduite d'évacuation ou des moyens de vidange ou d'évacuation d'un appareil (F) à vidanger.

De façon à pouvoir être déplacé sur des sols irréguliers et franchir des obstacles tels que seuils de portes, trottoirs ou dos d'âne, le bac (2) secondaire présente une garde (H) au sol, c'est à dire la hauteur par rapport au sol de sa partie la plus basse, relativement importante. Dans un mode de réalisation, cette garde au sol, sur la plus grande partie de la surface du bac (2) secondaire, est supérieure à 6 cm, et par exemple égale à 13 cm. De façon à assurer un équilibre stable en permanence et à pouvoir immobiliser le bac (2) secondaire en toute sécurité, par exemple lors d'un remplissage ou d'une vidange, ce bac (2) secondaire est muni de quatre roues (24) dont deux sont munies d'un dispositif (241) de freinage ou de blocage d'un type connu.

De façon à permettre l'introduction facile du bac secondaire (2) sous les moyens d'évacuation, sa cuve (201) présente une partie portant l'ouverture (23) de remplissage, dite partie avant, d'une largeur (L2) faible, par exemple 31 cm, et une hauteur maximale faible, par exemple 31 cm depuis le sol. De façon à présenter une capacité suffisante, par exemple d'environ 40 litres, le reste du conteneur (1) présente une largeur (L1), par exemple 57 cm, plus importante que la largeur (L2) de sa partie avant.

Dans un mode de réalisation, l'évacuation du contenu de la cuve (201) du bac (2) secondaire se fait par une conduite (22) de vidange plongeant au fond de cette cuva (201) et montant par exemple jusqu'à hauteur d'homme. Cette conduite (22) de vidange est connectée de façon amovible à la conduite (30) de remplissage ou à l'entrée (32') d'aspiration de la pompe (3) de la cuve (1). Cette connexion peut se faire par une conduite flexible (31, 31') ou comportant des éléments mobiles (non représentés). Dans un mode de réalisation (non représenté), l'évacuation du contenu de la cuve (201) du bac (2) secondaire se fait par une conduite (22) de vidange plongeant au fond de cette cuve (201), qui monte jusqu'au dessus au moins une partie de la cuve (1) et débouche au dessus d'une ouverture de la cuve (1)ou d'une ouverture d'un conduit conduisant à cette même cuve.

Selon une variante représentée en figure 2, cette conduite (22) de vidange comporte une pompe manuelle (3') ou motorisée (non représentée) permettant d'effectuer la vidange du bac (2) secondaire vers la cuve (1) lorsque celle-ci n'en est pas munie.

Dans un mode de réalisation, l'extrémité supérieure de la conduite (22) d'aspiration comporte un dispositif (221) de raccord rapide d'un type connu permettant de connecter et déconnecter aisément et rapidement cette extrémité au tuyau (31,31') de remplissage de la cuve (1).

Dans un mode de réalisation (non représenté), la conduite (22) d'aspiration du bac (2) secondaire est connectée de façon étanche à une ouverture dite de vidange située sur une paroi de la cuve (201) de ce bac secondaire et s'ouvre sur un point bas de son espace intérieur, ce qui permet ainsi une évacuation par simple gravité. Cette conduite de vidange peut également être déconnectable du bac secondaire, celui-ci pouvant comporter des moyens de coupure fermant cette ouverture de vidange.

De façon à pouvoir déplacer le bac (2) secondaire en toute sécurité, même lorsqu'il contient une huile ou matière grasse à haute température, typiquement aux environs de 165°C, l'ouverture (23) de remplissage est munie de moyens de connexion étanches raccordant cette la cuve (201) à des moyens de fermeture capables de maintenir cette étanchéité y compris à haute température.

Dans un mode de réalisation représenté en figure 2, ces moyens de fermeture comprennent un bouchon (232) circulaire, par exemple d'un diamètre approximatif de 20 cm, comportant un filetage et éventuellement des moyens d'étanchéité comme un joint annulaire. Lors de la fermeture, le serrage et l'étanchéité sont assurés par la coopération du filetage du bouchon avec un filetage porté par une partie cylindrique de la cuve (201) entourant l'ouverture (23) de remplissage. Selon les applications, cette étanchéité pourra être réalisée de façon statique ou dynamique. On entend par statique une étanchéité qui est réalisée y compris dans une situation où le liquide à arrêter est présent de façon continue dans la zone à étancher, C'est à dire par exemple qu'il sera possible d'incliner le bac de façon à ce que l'huile remplisse le bouchon et de maintenir cette position sans que l'huile ne s'échappe. Une telle étanchéité sera typiquement réalisée par un joint comprimé. On entend par dynamique une étanchéité qui est seulement réalisée dans une situation où le liquide à arrêter est présent de façon temporaire dans la zone à étancher. C'est à dire par exemple lorsque des cahots font monter l'huile jusqu'au bouchon pendant quelques instants. Une telle étanchéité sera typiquement réalisée par un simple contact de surfaces régulières, composant éventuellement une chicane ralentissant les sorties de liquide.

Dans un mode de réalisation, le bouchon (232) est relié à la cuve (201) par des moyens de retenue comme une chaînette (234). Ainsi, le bouchon (232) ne risque pas d'être égaré lorsqu'il est ouvert, et peut également être accroché par des moyens d'accrochage pour éviter de traîner, de se salir, ou d'encombrer l'opérateur. Cet accrochage peut se faire en posant le bouchon de façon à coiffer une partie saillante portée par le dessus du conteneur, par exemple par une ou plusieurs pattes (233) soudées sur sa paroi supérieure. Cet accrochage peut également se faire par vissage ou clipsage sur un renflement porté par le dessus de la cuve (201).

Selon les applications, ces moyens de fermeture du bac (2) secondaire peuvent être mis en place manuellement ou comporter des moyens de manoeuvre provoquant une ouverture automatique lors de la mise en position de remplissage du bac (2) secondaire, ou une fermeture automatique lors du retrait de cette position, ou les deux. Ces moyens de manoeuvre peuvent être commandé par une commande manuelle, ou par des moyens de détection de la position de remplissage, ou comporter un dispositif, par exemple mécanique, coopérant avec une partie de l'appareil de cuisson pour découvrir l'ouverture (23) de remplissage lors de la mise en position de remplissage.

De façon à éviter la pollution de l'huile récupérée par l'introduction dans le bac (2) secondaire de déchets solides venant ou non de l'appareil à vidanger, l'ouverture (23) de remplissage est munie d'au moins un élément de filtrage (231, figure 3) laissant passer les liquides et retenant les solides plus grands qu'une dimension déterminée. Dans un mode de réalisation, cet élément de filtrage est constitué d'un panier présentant la forme d'un cylindre vertical muni d'un fond plat, réalisé en tôle perforée, et posé sur des pattes solidaires des bords de l'ouverture (23) de remplissage. De façon à garantir le filtrage, cet élément de filtrage est bloqué en position par une ou plusieurs vis ou goupilles horizontales traversant la paroi verticale du panier. Ces vis dépassant sous la partie de la paroi supérieure de la cuve (201) constituant le bord de l'ouverture (23) de remplissage et coopère avec cette partie pour former une butée empêchant le soulèvement du panier. Cette fixation est démontable pour pouvoir extraire cet élément de filtrage afin de le nettoyer dans un lave-vaisselle standard. Pour faciliter son extraction, le panier comporte des moyens de préhension, par exemple constitués d'une barre horizontale fixée à l'intérieur du panier selon une position sensiblement diamétrale et à une certaine distance du fond de ce panier.

Selon les applications, cet élément de filtrage (231) peut comporter des moyens de verrouillage, par exemple une serrure ou une fixation nécessitant un outil ou une clé spéciale pour être démontée, de façon à garantir qu'il ne sera pas retiré pas des personnes non autorisées, voulant par exemple introduire certains déchets solides dans le bac (2) secondaire au lieu de les jeter séparément. Ce filtrage éventuellement assorti d'un verrouillage permet de garantir que les liquides récupérés seront exempts de déchets solides qui risqueraient de boucher les conduits de vidange ou de transfert, ainsi que de déchets solides d'autres provenance qui risqueraient de polluer le liquide récupéré et de compromettre la traçabilité et donc la valorisation du cycle de récupération de ce liquide.

Dans un mode de réalisation, l'ouverture (23) de remplissage du bac (2) secondaire comporte plusieurs éléments filtrants. Selon les applications, ces éléments filtrants peuvent présenter des finesses égales ou différentes. Certains de ces éléments filtrants peuvent comporter un verrouillage pour garantir leur maintien en place, certains autres pouvant être facilement extractibles pour pouvoir ôter facilement les déchets qui y sont accumulés.

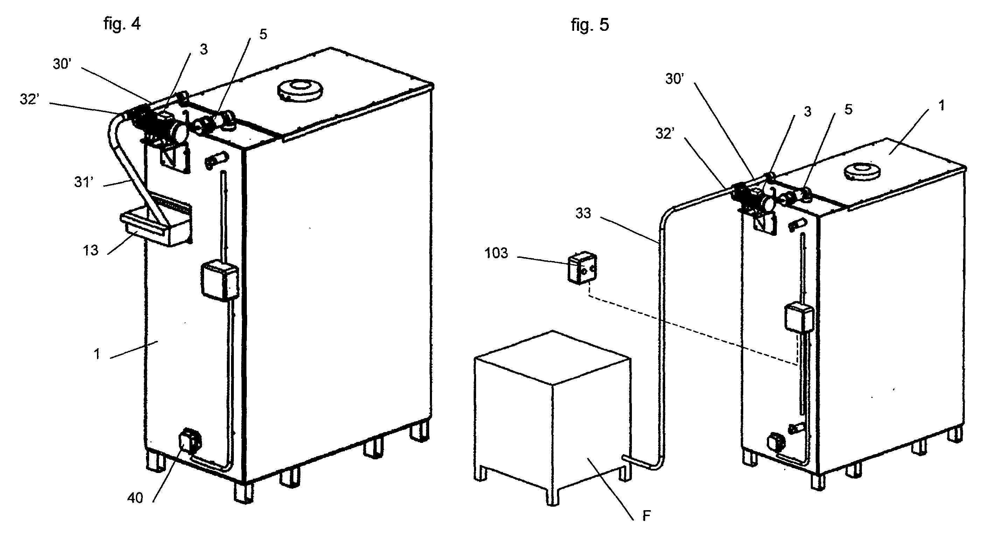

Dans un mode de réalisation représenté en figure 4, la cuve (1) comporte un réceptacle (13) dit d'égouttage disposé à l'extérieur de cette même cuve, dans lequel ou au-dessus duquel il est possible de positionner une conduite flexible (31, 31') ou mobile menant à la conduite (30) de remplissage ou à l'entrée (32') d'aspiration de la pompe (3) de la cuve (1). Ce réceptacle d'égouttage recueille ainsi les résidus d'huile qui pourraient goutter ou couler de cette même conduite entre deux utilisations. Dans un mode de réalisation, ce réceptacle d'égouttage présente la forme d'un bac rectangulaire ouvert sur le dessus, accroché de façon amovible sur une paroi extérieure de la cuve (1), par exemple par des pattes dirigées vers le bas s'insérant derrière une réglette horizontale solidaire de cette paroi. Il est ainsi possible de retirer aisément ce réceptacle (13) d'égouttage pour le nettoyer en machine comme n'importe quel ustensile de cuisine.

Dans un mode de réalisation représenté en figure 5, la cuve (1) reçoit directement les huiles usagées par une connexion permanente avec un ou plusieurs appareils (F) utilisant de l'huile alimentaire. Cette connexion est réalisée par une ou plusieurs conduites (33), par exemple rigides, raccordées d'un côté à l'évacuation des appareils (F) à vidanger et de l'autre côté à la conduite (30) de remplissage ou à l'entrée (32') d'aspiration de la pompe (3) de la cuve (1). De façon à éviter que l'huile se fige dans cette conduite (33) et n'y empêche la circulation, cette conduite est munie de moyens de chauffage permettant de maintenir sur toute la longueur de cette conduite (33) une température supérieure à la température de solidification de l'huile, et ce sur au moins une partie de sa section. Ces moyens de chauffage peuvent comprendre un cordon électrique chauffant à base de fil résistif. Ils peuvent être commandés de façon à maintenir la température voulue soit en permanence, éventuellement avec une régulation évitant toute température excessive, ou être déclenchés à un instant déterminé de façon à ce que la conduite (33) soit à une température suffisante à un autre instant déterminé choisi pour effectuer le transvasement de l'appareil (F) à vidanger vers la cuve (1).

Selon les applications, ce cordon chauffant peut être choisi pour pouvoir résister aux températures élevées que présente l'huile lors de son utilisation ou au moment de la vidange des appareils qui l'utilisent.

Dans un mode de réalisation représenté en figure 5, le dispositif selon l'invention ou une quelconque combinaison de ses fonctions est commandé ou contrôlé ou les deux par des moyens de commande ou de contrôle comprenant un module (103) de commande séparé des autres éléments du dispositif. Ce module (103) de commande peut être situé par exemple dans un bureau ou à proximité d'un appareil de cuisson et communique avec le reste du dispositif par liaison filaire ou sans fil.

Ainsi, on conçoit que la cuve selon l'invention permette de rendre sécuritaire la manutention de l'huile chaude entre un appareil de cuisson et le récipient de stockage, notamment du fait que le transvasement est effectué, soit par un conduit (30) et une pompe externe, soit par l'intermédiaire du bac secondaire conformé pour faciliter le transvasement. De même on comprend que les conditions de stockage de l'huile n'entraînent pas de dégradation importante de ses qualités, notamment par le fait qu'elle n'est chauffée que le temps nécessaire pour pouvoir être manipulée. En effet, l'huile est conservée à température ambiante sans chauffage jusqu'au moment où la cuve doit être vidangée. Dans ce cas l'huile est chauffée pour pouvoir être pompée.

De même, la cuve selon l'invention permet d'assurer une traçabilité aval de l'utilisation de l'huile. Selon l'art antérieur les fûts utilisés ne permettent pas cette traçabilité. En effet, il ne peut donner une certitude absolue sur l'utilisation antérieure des fûts. De même, les fûts peuvent être collectés par n'importe quel prestataire possédant des camions de transport. De plus, les fûts à ouverture totale peuvent être pollués car ils sont très accessibles. Selon l'invention, le prestataire responsable du recyclage doit au moins posséder un camion citerne équipé d'un système d'aspiration fonctionnant à des températures de l'ordre de 50 à 60°C. Lorsque la conduite de vidange est équipée du connecteur de forme unique, alors la traçabilité est quasi-certaine. Enfin, il apparaît clairement que la cuve permet un gain de place important. En effet selon l'art antérieur la surface de stockage d'un fût est d'environ 1 m² pour une contenance de 200 litres. La cuve définie précédemment par les dimensions particulières occupe une surface au sol d'environ 1 m² pour une contenance d'environ 1500 litres. De plus il n'est pas nécessaire de la déplacer une fois mise en place.

Ainsi, le conteneur de récupération d'huile alimentaire usagée selon l'invention comprend une cuve (1) fermée de volume déterminé comprenant sur le dessus (11), une conduite (30) de remplissage de l'huile usagée, une conduite (5) de vidange par aspiration de l'huile, une extrémité (52) de la conduite de vidange étant située à proximité du fond (10) de la cuve (1), la cuve (1) comprenant également à proximité du fond (10), des moyens (4) de chauffage pour amener l'huile à une température supérieure à sa température de solidification, le conteneur étant caractérisé en ce que les moyens de chauffage sont déclenchés par des moyens de commande à un premier instant déterminé, ce premier instant étant choisi de sorte que l'huile stockée dans la cuve soit suffisamment liquide à un deuxième instant, choisi par un utilisateur, pour effectuer la vidange par aspiration.

Dans un autre mode de réalisation, la cuve (1) comprend des moyens (6) de détection du niveau ou de la présence d'huile transmettant aux moyens de commande un signal représentatif du niveau d'huile, de sorte que les moyens de chauffage ne sont mis en marche que lorsqu'un niveau minimum (NH) d'huile est présent dans la cuve (1) et lorsque les moyens de commande sont activés.

Dans un autre mode de réalisation, les moyens de détection du niveau d'huile comprennent des moyens (60) d'alerte déclenchés lorsque au moins un premier niveau (N2) maximum d'huile est atteint.

Dans un autre mode de réalisation, la cuve (1) comprend un bac (2) amovible, dit secondaire, comprenant une ouverture dans sa partie supérieure et des moyens de vidange (3, 22, 31') connectés sur le dessus de la cuve (1) par l'intermédiaire d'une conduite de refoulement (30'), le bac (2) secondaire comprenant également des moyens de détection du niveau d'huile transmettant un signal représentatif du niveau d'huile, de sorte que les moyens de vidange (3, 22, 31') soient déclenchés dès qu'un niveau minimum d'huile est détecté dans le bac (2).

Dans un autre mode de réalisation, la cuve (1) comprend un bac (2) amovible, dit secondaire, comprenant une ouverture dans sa partie supérieure et des moyens de vidange (3, 22, 31') connectés sur le dessus de la cuve (1) par l'intermédiaire d'une conduite de refoulement (30'), le bac (2) secondaire comprenant également des moyens de détection de présence transmettant un signal représentatif de la présence d'huile, de sorte que les moyens de vidange (3, 22, 31') soient déclenchés dès que la présence d'huile est détectée dans le bac (2).

Dans un autre mode de réalisation, la cuve (1) comprend des moyens de régulation de la température des moyens de chauffage pour maintenir la température de l'huile à une température supérieure de l'ordre de 15°C à la température de solidification, avec une erreur de + ou - 5°C.

Dans un autre mode de réalisation, les moyens de détection de niveau comprennent un flotteur (6) relié à un dispositif mécanique (60) ou électronique d'affichage extérieur.

Dans un autre mode de réalisation, les moyens de détection de niveau comprennent un dispositif de détection à ultrasons ou à hyperfréquences fournissant un signal représentatif du niveau, soit à un dispositif d'affichage situé sur une partie extérieure visible de la cuve, soit à un terminal de contrôle distant par l'intermédiaire d'une liaison de communication.

Dans un autre mode de réalisation, les moyens de détection de niveau comprennent sur la conduite de remplissage (30) et sur la conduite (5) de vidange, d'une part un dispositif de mesure de volume de fluide comprenant un débitmètre et d'autre part un calculateur connecté aux deux dispositifs de mesure du volume pour recevoir des signaux représentatifs de la quantité d'huile entrant et de celle sortant de la cuve (1) afin de calculer la différence entre ces deux quantités pour déterminer la quantité d'huile présente dans la cuve et assurer une traçabilité aval de l'huile alimentaire usagée.

Dans un autre mode de réalisation, les moyens de détection de niveau de la conduite (5) de vidange sont déportés sur la conduite de pompage d'un véhicule de collecte de l'huile alimentaire usagée.

Dans un autre mode de réalisation, les moyens (4) de chauffage comprennent, au moins un ensemble d'au moins deux éléments chauffants, monté de façon amovible dans un plan sensiblement parallèle au fond de la cuve.

Dans un autre mode de réalisation, chaque élément (4) chauffant comprend un indicateur visuel et/ou un indicateur sonore de son dysfonctionnement et/ou un indicateur fournissant un signal représentatif du dysfonctionnement de l'élément chauffant à un terminal de contrôle distant par l'intermédiaire d'une liaison de communication.

Dans un autre mode de réalisation, le dessus de la cuve (1) comprend au moins un évent (111) obturé par un filtre à odeur.

Dans un autre mode de réalisation, le fond (10) de la cuve (1) comprend un bossage (101) formant un réceptacle dans lequel plonge l'extrémité libre (52) de la conduite (5) de vidange, de sorte que lors de l'opération de vidange tout le fluide contenu dans la cuve (1), hormis la quantité négligeable restante dans le bossage (101), est aspiré.

Dans un autre mode de réalisation, les moyens de commande comprennent un interrupteur manuel actionnable par un opérateur.

Dans un autre mode de réalisation, les moyens de commande comprennent un interrupteur commandé à distance par l'intermédiaire d'une liaison de communication avec un central de recyclage de l'huile.

Dans un autre mode de réalisation, la cuve comprend des moyens de mesure de la température comprenant un dispositif d'affichage disposé sur une partie extérieure et visible de la cuve et/ou transmettant une information représentative de la température à un terminal de contrôle distant par l'intermédiaire d'une liaison de communication.

Dans un autre mode de réalisation, la cuve (1) comprend des moyens de communication avec un centre de recyclage de l'huile, les moyens de communication étant connectés aux moyens de déclenchement des moyens de chauffage, aux moyens de chauffage, aux moyens de détection de niveau d'huile, éventuellement aux moyens de mesure de la température de l'huile et aux moyens de vidange du bac secondaire, pour recevoir des signaux représentatifs, d'une part de l'état de fonctionnement de chacun des moyens et d'autre part de la valeur du niveau et de la température d'huile dans la cuve.

Dans un autre mode de réalisation, le fond (10) de la cuve (1) comprend une pluralité de pieds (102) de support espacés sur la longueur et sur la largeur et sur la longueur de la cuve (1) de façon à permettre le déplacement de la cuve par l'intermédiaire de moyens de levage conventionnels, soit dans le sens de la longueur, soit dans le sens de la largeur, de façon à faciliter le déplacement et la mise en place de la cuve (1) à l'intérieur d'un bâtiment.

Dans un autre mode de réalisation, le dessus (11) de la cuve (1) comprend une ouverture fermée par un couvercle permettant l'accès par un opérateur à l'intérieur de la cuve (1) pour la maintenance.

Dans un autre mode de réalisation, le fond (10) de la cuve (1) comprend au moins une conduite d'évacuation.

Dans un autre mode de réalisation, l'extrémité (51) de la conduite de vidange située à l'extérieur de la cuve comprend un connecteur de forme déterminée non standard permettant une connexion spécifique et identifiée avec un véhicule de collecte d'huile alimentaire usagée pour garantir la traçabilité aval de huile.

Dans un autre mode de réalisation, les moyens de chauffage comprennent des moyens de sécurité comportant une horloge qui est déclenchée dès que les moyens de chauffage sont allumés, l'horloge est connectée aux moyens de déclenchement de sorte que les moyens de chauffage sont éteints après une durée déterminée indiquée par l'horloge, correspondant au moins à la durée nécessaire pour liquéfier l'huile contenue dans la cuve, de façon à empêcher le chauffage prolongé de l'huile avec le premier instant déterminé.

Dans un autre mode de réalisation, le dessus de la cuve (1) est amovible.

Dans un autre mode de réalisation, le conteneur comporte un réceptacle (13) présentant une ouverture accessible par l'extérieur de la cuve, ce réceptacle étant apte à recevoir une extrémité d'un conduit de remplissage (31), de façon à ce que les résidus liquide pouvant couler de cette extrémité entre deux utilisations du conduit de remplissage soient recueillis par ce même réceptacle.

Dans un autre mode de réalisation, le conteneur est caractérisé en ce que le réceptacle (13) est fixé à la cuve (1) de manière aisément amovible de façon à pouvoir être nettoyé séparément.

Dans un autre mode de réalisation, le conteneur est caractérisé en ce qu'il comporte un conduit (33) chauffé raccordé d'un côté à l'entrée (32') d'aspiration de la pompe (3) ou à la conduite de remplissage (30) et de l'autre côté à des moyens de vidange ou d'évacuation d'au moins un appareil (F) utilisant une huile de cuisson alimentaire, ce conduit comportant des moyens de chauffage permettant de maintenir liquide ou de liquéfier l'huile circulant ou restant à l'intérieur de ce même conduit.

Dans un autre mode de réalisation, le conteneur est caractérisé en ce que les moyens de chauffage du conduit (33) chauffant comprennent un fil résistif de chauffage appliqué sur la longueur de ce même conduit et résistant à la température maximale de l'huile pouvant circuler dans ledit conduit.

Dans un autre mode de réalisation, le conteneur est caractérisé en ce que les moyens de commande et contrôle comprennent un interrupteur commandé par un module (103) de commande ou de contrôle, éloigné de la cuve (1) et communiquant avec celle-ci par une transmission filaire ou sans fil.

Dans un autre mode de réalisation, le conteneur est caractérisé en ce qu'il comprend au moins un bac (2) mobile dit secondaire, comportant une cuve (201) munie d'une ouverture (23) de remplissage et d'une conduite d'aspiration (22) connectée de façon amovible à la cuve (1), par un conduit flexible ou mobile (31, 31'), ou débouchant au dessus d'une ouverture conduisant à la cuve (1).

Dans un autre mode de réalisation, l'ouverture (23) de remplissage du bac (2) secondaire comporte des moyens de connexion, étanches en statique ou en dynamique, aptes à coopérer avec des moyens de fermeture, pour éviter les épanchements d'huile lors des secousses du transport, y compris à la température maximale de l'huile.

Dans un autre mode de réalisation, le bac secondaire (2) repose sur au moins trois roues (24) disposées de façon à assurer une stabilité permanente, les dimensions et la position de ces roues assurant une garde au sol (H) supérieure à six centimètres pour la plus grande partie du bac secondaire.

Dans un autre mode de réalisation, la partie du bac (2) secondaire comprenant l'ouverture (23) de remplissage présente une largeur (L2) plus faible que la largeur (L1) maximale de ce même conteneur, cette largeur (L2) correspondant à la dimension minimale de l'espace libéré sous une friteuse.

Dans un autre mode de réalisation, la conduite d'aspiration (22) du bac secondaire (2) comprend une pompe (3') de vidange manuelle ou motorisée aspirant le contenu de ce bac (2) et refoulant dans la cuve (1) par le conduit flexible ou mobile (31, 31').

Dans un autre mode de réalisation, le conteneur comporte une pompe (3) manuelle ou motorisée aspirant dans le bac secondaire (2) par le conduit flexible ou mobile (31, 31') et refoulant dans la cuve (1).

Dans un autre mode de réalisation, l'ouverture (23) de remplissage du bac secondaire (2) comprend au moins un élément (231) de filtrage amovible apte à retenir les particules solides plus grandes qu'une dimension déterminée.

Dans un autre mode de réalisation, l'élément (231) de filtrage de l'ouverture (23) de remplissage du bac secondaire (2) est maintenu par des moyens de verrouillage de façon à interdire son retrait par une personne non autorisée.

Dans un autre mode de réalisation, la conduite (22) d'aspiration du bac (2) secondaire est connectée de façon étanche à une ouverture située sur une paroi de sa cuve (201) et ouvrant sur un point bas de l'espace intérieur dudit bac secondaire, de façon à permettre une vidange par gravité.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Conteneur de récupération d'huile alimentaire usagée, comprenant une cuve (1) fermée de volume déterminé comprenant sur le dessus (11), une conduite (30) de remplissage de l'huile usagée, une conduite (5) de vidange par aspiration de l'huile, une extrémité (52) de la conduite de vidange étant située à proximité du fond (10) de la cuve (1), la cuve (1) comprenant également à proximité du fond (10), des moyens (4) de chauffage pour amener l'huile à une température supérieure à sa température de solidification, le conteneur étant **caractérisé par** des moyens de commande des moyens de chauffage aptes à permettre le déclenchement de ces derniers à un premier instant déterminé dépendant d'un deuxième instant déterminé choisi pour la vidange, de sorte que l'huile stockée dans la cuve soit suffisamment liquide pour effectuer la vidange par aspiration.

2. Conteneur de récupération d'huile alimentaire usagée selon la revendication 1, **caractérisé en ce que** la cuve (1) comprend des moyens (6) de détection du niveau et/ou de la présence d'huile transmettant aux moyens de commande un signal représentatif du niveau d'huile, de sorte que les moyens de chauffage ne sont mis en marche que lorsqu'un niveau minimum (NH) d'huile est présent dans la cuve (1) et lorsque les moyens de commande sont activés.

3. Conteneur de récupération d'huile alimentaire usagée selon la revendication 2, **caractérisé en ce que** les moyens de détection du niveau d'huile comprennent des moyens (60) d'alerte déclenchés lorsque au moins un premier niveau (N2) maximum d'huile est atteint.

4. Conteneur de récupération d'huile alimentaire usagée selon l'une des revendications 2 ou 3, **caractérisé en ce que** la cuve (1) comprend un bac (2) amovible, dit secondaire, comprenant une ouverture dans sa partie supérieure et des moyens de vidange (3, 22, 31') connectés sur le dessus de la cuve (1) par l'intermédiaire d'une conduite de refoulement (30'), le bac (2) secondaire comprenant également des moyens de détection du niveau d'huile transmettant un signal représentatif du niveau d'huile, de sorte que les moyens de vidange (3, 22, 31') soient déclenchés dès qu'un niveau minimum d'huile est détecté dans le bac (2).

5. Conteneur de récupération d'huile alimentaire usagée selon l'une des revendications 2 ou 3, **caractérisé en ce que** la cuve (1) comprend un bac (2) amovible, dit secondaire, comprenant une ouverture dans sa partie supérieure et des moyens de vidange (3, 22, 31') connectés sur le dessus de la cuve (1) par l'intermédiaire d'une conduite de refoulement (30'), le bac (2) secondaire comprenant également des moyens de détection de présence transmettant un signal représentatif de la présence d'huile, de sorte que les moyens de vidange (3, 22, 31') soient déclenchés dès que la présence d'huile est détectée dans le bac (2).

6. Conteneur de récupération d'huile alimentaire usagée selon l'une des revendications 1 à 5, **caractérisé en ce que** la cuve (1) comprend des moyens de régulation de la température des moyens de chauffage pour maintenir la température de l'huile à une température supérieure de l'ordre de 15°C à la température de solidification, avec une erreur de + ou - 5°C.

7. Conteneur de récupération d'huile alimentaire usagée selon la revendication 2, **caractérisé en ce que** les moyens de détection de niveau comprennent un flotteur (6) relié à un dispositif mécanique (60) ou électronique (100) d'affichage extérieur.

8. Conteneur de récupération d'huile alimentaire usagée selon la revendication 2 ou 7, **caractérisé en ce que** les moyens de détection de niveau comprennent un dispositif de détection à ultrasons ou à hyperfréquences fournissant un signal représentatif du niveau, soit à un dispositif d'affichage situé sur une partie extérieure visible de la cuve, soit à un terminal de contrôle distant par l'intermédiaire d'une liaison de communication.

9. Conteneur de récupération d'huile alimentaire usagée selon l'une des revendications 2, 7 ou 8, **caractérisé en ce que** les moyens de détection de niveau comprennent sur la conduite de remplissage (30) et sur la conduite (5) de vidange, d'une part un dispositif de mesure de volume de fluide comprenant un débitmètre et d'autre part un calculateur connecté aux deux dispositifs de mesure du volume pour recevoir des signaux représentatifs de la quantité d'huile entrant et de celle sortant de la cuve (1) afin de calculer la différence entre ces deux quantités pour déterminer la quantité d'huile présente dans la cuve et assurer une traçabilité aval de l'huile alimentaire usagée.

10. Conteneur de récupération d'huile alimentaire usagée selon la revendication 9, **caractérisé en ce que** les moyens de détection de niveau de la conduite (5) de vidange sont déportés sur la conduite de pompage d'un véhicule de collecte de l'huile alimentaire usagée.

11. Conteneur de récupération d'huile alimentaire usagée selon l'une des revendications 1 à 10, **caractérisé en ce que** les moyens (4) de chauffage comprennent au moins un ensemble d'au moins deux éléments chauffants, monté de façon amovible dans un plan sensiblement parallèle au fond de la cuve.

12. Conteneur de récupération d'huile alimentaire usagée selon la revendication 11, **caractérisé en ce que** chaque élément (4) chauffant comprend un indicateur visuel et/ou un indicateur sonore de son dysfonctionnement et/ou un indicateur fournissant un signal représentatif du dysfonctionnement de l'élément chauffant à un terminal de contrôle distant par l'intermédiaire d'une liaison de communication.

13. Conteneur de récupération d'huile alimentaire usagée selon l'une des revendications 1 à 12, **caractérisé en ce que** le dessus de la cuve (1) comprend au moins un évent (111) obturé par un filtre à odeur.

14. Conteneur de récupération d'huile alimentaire usagée selon l'une des revendications 1 à 13, **caractérisé en ce que** le fond (10) de la cuve (1) comprend un bossage (101) formant un réceptacle dans lequel plonge l'extrémité libre (52) de la conduite (5) de vidange, de sorte que lors de l'opération de vidange tout le fluide contenu dans la cuve (1), hormis la quantité négligeable restante dans le bossage (101), est aspiré.

15. Conteneur de récupération d'huile alimentaire usagée selon l'une des revendications 1 à 14, **caractérisé en ce que** les moyens de commande comprennent un interrupteur manuel actionnable par un opérateur.

16. Conteneur de récupération d'huile alimentaire usagée selon l'une des revendications 1 à 14, **caractérisé en ce que** les moyens de commande comprennent un interrupteur commandé à distance par l'intermédiaire d'une liaison de communication avec un central de recyclage de l'huile.

17. Conteneur de récupération d'huile alimentaire usagée selon l'une des revendications 1 à 16, **caractérisé en ce que** la cuve comprend des moyens de mesure de la température comprenant un dispositif d'affichage disposé sur une partie extérieure et visible de la cuve et/ou transmettant une information représentative de la température à un terminal de contrôle distant par l'intermédiaire d'une liaison de communication.

18. Conteneur de récupération d'huile alimentaire usagée selon l'une des revendications 1 à 17, **caractérisé en ce que** la cuve (1) comprend des moyens de communication avec un centre de recyclage de l'huile, les moyens de communication étant connectés aux moyens de déclenchement des moyens de chauffage ou aux moyens de chauffage ou aux moyens de détection de niveau d'huile ou aux moyens de mesure de la température de l'huile ou aux moyens de vidange du bac secondaire ou à une combinaison de ces éléments, pour recevoir des signaux représentatifs, soit de l'état de fonctionnement de chacun des moyens, soit de la valeur du niveau et de la température d'huile dans la cuve, soit d'une combinaison de ces éléments.

19. Conteneur de récupération d'huile alimentaire usagée selon l'une des revendications 1 à 18, **caractérisé en ce que** le fond (10) de la cuve (1) comprend une pluralité de pieds (102) de support espacés sur la longueur et sur la largeur de la cuve (1) de façon à permettre le déplacement de la cuve par l'intermédiaire de moyens de levage conventionnels, soit dans le sens de la longueur, soit dans le sens de la largeur, de façon à faciliter le déplacement et la mise en place de la cuve (1) à l'intérieur d'un bâtiment.

20. Conteneur de récupération d'huile alimentaire usagée selon l'une des revendications 1 à 17, **caractérisé en ce que** le dessus (11) de la cuve (1) comprend une ouverture (110) fermée par un couvercle permettant l'accès par un opérateur à l'intérieur de la cuve (1) pour la maintenance.

21. Conteneur de récupération d'huile alimentaire usagée selon l'une des revendications 1 à 20, **caractérisé en ce que** le fond (10) de la cuve (1) comprend au moins une conduite d'évacuation.

22. Conteneur de récupération d'huile alimentaire usagée selon l'une des revendications 1 à 21, **caractérisé en ce que** l'extrémité (51) de la conduite de vidange située à l'extérieur de la cuve comprend un connecteur de forme déterminée non standard permettant une connexion spécifique et identifiée avec un véhicule de collecte d'huile alimentaire usagée pour garantir la traçabilité aval de l'huile.

23. Conteneur de récupération d'huile alimentaire usagée selon l'une des revendications 1 à 22, **caractérisé en ce que** les moyens de chauffage comprennent des moyens de sécurité comportant une horloge qui est déclenchée dès que les moyens de chauffage sont allumés, l'horloge est connectée aux moyens de déclenchement de sorte que les moyens de chauffage sont éteints après une durée déterminée indiquée par l'horloge, correspondant au moins à la durée nécessaire pour liquéfier l'huile contenue dans la cuve, de façon à empêcher le chauffage prolongé de l'huile avec le premier instant déterminé.

24. Conteneur de récupération d'huile alimentaire usagée selon l'une des revendications 1 à 23, **caractérisé en ce que** le dessus de la cuve (1) est amovible.

25. Conteneur selon l'une des revendications précédentes, **caractérisé en ce qu'**il comporte un réceptacle (13) présentant une ouverture accessible par l'extérieur de la cuve, ce réceptacle étant apte à recevoir une extrémité d'un conduit de remplissage (31), de façon à ce que les résidus liquide pouvant couler de cette extrémité entre deux utilisations du conduit de remplissage soient recueillis par ce même réceptacle.

26. Conteneur selon la revendication 25, **caractérisé en ce que** le réceptacle (13) est fixé à la cuve (1) de manière aisément amovible de façon à pouvoir être nettoyé séparément.

27. Conteneur selon l'une des revendications précédentes, **caractérisé en ce qu'**il comporte un conduit (33) chauffé raccordé d'un côté à l'entrée (32') d'aspiration d'une pompe (3) ou à la conduite de remplissage (30) et de l'autre côté à des moyens de vidange ou d'évacuation d'au moins un appareil (F) utilisant une huile de cuisson alimentaire, ce conduit comportant des moyens de chauffage permettant de maintenir liquide ou de liquéfier l'huile circulant ou restant à l'intérieur de ce même conduit.

28. Conteneur selon la revendication 27, **caractérisé en ce que** les moyens de chauffage du conduit (33) chauffant comprennent un fil résistif de chauffage appliqué sur la longueur de ce même conduit et résistant à la température maximale de l'huile pouvant circuler dans ledit conduit.

29. Conteneur selon l'une des revendications précédentes, **caractérisé en ce que** les moyens de commande et contrôle comprennent un interrupteur commandé par un module (103) de commande ou de contrôle, éloigné de la cuve (1) et communiquant avec celle-ci par une transmission filaire ou sans fil.

30. Conteneur selon l'une des revendications précédentes, **caractérisé en ce qu'**il comprend au moins un bac (2) mobile dit secondaire, comportant une cuve (201) munie d'une ouverture (23) de remplissage et d'une conduite d'aspiration (22) connectée de façon amovible à la cuve (1), par un conduit flexible ou mobile (31, 31'), ou débouchant au dessus d'une ouverture conduisant à la cuve (1).

31. Conteneur selon la revendication 30, **caractérisé en ce que** l'ouverture (23) de remplissage du bac (2) secondaire comporte des moyens de connexion, étanches en statique ou en dynamique, aptes à coopérer avec des moyens de fermeture, pour éviter les épanchements d'huile lors des secousses du transport, y compris à la température maximale de l'huile.

32. Conteneur selon l'une des revendications 30 ou 31, **caractérisé en ce que** le bac secondaire (2) repose sur au moins trois roues (24) disposées de façon à assurer une stabilité permanente, les dimensions et la position de ces roues assurant une garde au sol (H) supérieure à six centimètres pour la plus grande partie du bac secondaire.

33. Dispositif selon l'une des revendications 30 à 32, **caractérisé en ce que** la partie du bac (2) secondaire comprenant l'ouverture (23) de remplissage présente une largeur (L2) plus faible que la largeur (L1) maximale de ce même conteneur, cette largeur (L2) correspondant à la dimension minimale de l'espace libéré sous une friteuse.

34. Conteneur selon l'une des revendications 30 à 33, **caractérisé en ce que** la conduite d'aspiration (22) du bac secondaire (2) comprend une pompe (3') de vidange manuelle ou motorisée aspirant le contenu de ce bac (2) et refoulant dans la cuve (1) par le conduit flexible ou mobile (31, 31').

35. Conteneur selon l'une des revendications 30 à 34, **caractérisé en ce qu'**il comporte une pompe (3) manuelle ou motorisée aspirant dans le bac secondaire (2) par le conduit flexible ou mobile (31, 31') et refoulant dans la cuve (1).

36. Conteneur selon l'une des revendications 30 à 35, **caractérisé en ce que** l'ouverture (23) de remplissage du bac secondaire (2) comprend au moins un élément (231) de filtrage amovible apte à retenir les particules solides plus grandes qu'une dimension déterminée.

37. Conteneur selon la revendication 36, **caractérisé en ce que** l'élément (231) de filtrage de l'ouverture (23) de remplissage du bac secondaire (2) est maintenu par des moyens de verrouillage de façon à interdire son retrait par une personne non autorisée.

38. Dispositif selon l'une des revendications 30 à 37, **caractérisé en ce que** la conduite (22) d'aspiration du bac (2) secondaire est connectée de façon étanche à une ouverture située sur une paroi de sa cuve (201) et ouvrant sur un point bas de l'espace intérieur dudit bac secondaire, de façon à permettre une vidange par gravité.

## Patentansprüche

1. Sammelbehälter für gebrauchtes Speiseöl, enthaltend eine geschlossene Wanne (1) bestimmten Volumens, die an der Oberseite (11) eine Leitung (30) zum Einfüllen von gebrauchtem Öl, eine Leitung (5) zum Entfernen durch Ansaugen des Öls, wobei ein Ende (52) der Entleerungsleitung sich nahe dem Boden (10) der Wanne (1) befindet, wobei die Wanne (1) auch nahe dem Boden (10) Heizmittel (4) enthält, um das Öl auf eine Temperatur über seiner Stockungstemperatur zu bringen, wobei der Behälter **gekennzeichnet ist durch** Mittel zum Steuern der Heizmittel, welche das Auslösen derselben zu einem bestimmten ersten Zeitpunkt ermöglichen können, der von einem bestimmten für das Entfernen gewählten zweiten Zeitpunkt abhängt, so dass das in der Wanne gelagerte Öl flüssig genug ist, um das Ablassen **durch** Ansaugen durchzuführen.

2. Sammelbehälter für gebrauchtes Speiseöl nach Anspruch 1, **dadurch gekennzeichnet, dass** die Wanne (1) Mittel (6) zum Erfassen des Pegels und/oder vorhandenen Öls enthält, die den Steuermitteln ein Signal zuführen, das den Ölpegel darstellt, so dass die Heizmittel nur dann eingeschaltet werden, wenn ein Mindestölpegel (NH) in der Wanne (1) vorhanden ist und wenn die Steuermittel aktiviert sind.

3. Sammelbehälter für gebrauchtes Speiseöl nach Anspruch 2, **dadurch gekennzeichnet, dass** die Ölpegelerfassungsmittel Warnmittel (60) enthalten, die dann ausgelöst werden, wenn zumindest ein erster maximaler Ölpegel (N2) erreicht ist.

4. Sammelbehälter für gebrauchtes Speiseöl nach Anspruch 2 oder 3, **dadurch gekennzeichnet, dass** die Wanne (1) abnehmbar ein sogenanntes Nebenbecken (2) enthält, das in seinem oberen Bereich eine Öffnung enthält und Entleerungsmittel (3, 22, 31') aufweist, die an der Oberseite der Wanne (1) über eine Druckleitung (30') verbunden sind, wobei das Nebenbecken (2) auch Mittel zum Erfassen des Ölpegels enthält, die ein den Ölpegel darstellendes Signal abgeben, so dass die Entleerungsmittel (3, 22, 31') ausgelöst werden, sobald ein Mindestölpegel im Becken (2) erfasst wird.

5. Sammelbehälter für gebrauchtes Speiseöl nach Anspruch 2 oder 3, **dadurch gekennzeichnet, dass** die Wanne (1) abnehmbar ein sogenanntes Nebenbecken (2) enthält, das in seinem oberen Bereich eine Öffnung enthält und Entleerungsmittel (3, 22, 31') aufweist, die an der Oberseite der Wanne (1) über eine Druckleitung (30') verbunden sind, wobei das Nebenbecken (2) auch Mittel zum Erfassen vorhandenen Öls enthält, die ein vorhandenes Öl darstellendes Signal abgeben, so dass die Entleerungsmittel (3, 22, 31') ausgelöst werden, sobald vorhandenes Öl im Becken (2) erfasst wird.

6. Sammelbehälter für gebrauchtes Speiseöl nach einem der Ansprüche 1 bis 5, **dadurch gekennzeichnet, dass** die Wanne (1) Mittel zum Einstellen der Temperatur der Heizmittel enthält, um die Öltemperatur auf einer Temperatur zu halten, die um etwa 15°C +/- 5°C höher ist als die Stockungstemperatur.

7. Sammelbehälter für gebrauchtes Speiseöl nach Anspruch 2, **dadurch gekennzeichnet, dass** die Pegelerfassungsmittel einen Schwimmer (6) enthalten, der mit einer äußeren mechanischen Anzeigevorrichtung (60) oder elektronischen Anzeigevorrichtung (100) verbunden ist.

8. Sammelbehälter für gebrauchtes Speiseöl nach Anspruch 2 oder 7, **dadurch gekennzeichnet, dass** die Pegelerfassungsmittel eine Ultraschall- oder Ultrahochfrequenzerfassungsvorrichtung enthalten, die ein den Pegel darstellendes Signal entweder einer an einem sichtbaren Außenbereich der Wanne befindlichen Anzeigevorrichtung oder über eine Kommunikationsverbindung einem entfernt liegenden Kontrollterminal zuführt.

9. Sammelbehälter für gebrauchtes Speiseöl nach einem der Ansprüche 2, 7 oder 8, **dadurch gekennzeichnet, dass** die Pegelerfassungsmittel an der Füllleitung (30) und an der Entleerungsleitung (5) einerseits eine Fluidvolumenmessvorrichtung mit einem Durchflussmesser und andererseits einen Rechner enthalten, der mit den beiden Volumenmessvorrichtungen verbunden ist, um Signale zu empfangen, welche die in die Wanne (1) einfließende und aus dieser herausfließende Ölmenge darstellen, um die Differenz zwischen diesen beiden Mengen zu errechnen, um daraus die in der Wanne vorhandene Ölmenge zu bestimmen und im Nachlauf eine Rückverfolgbarkeit des gebrauchten Speiseöls zu gewährleisten.

10. Sammelbehälter für gebrauchtes Speiseöl nach Anspruch 9, **dadurch gekennzeichnet, dass** die Pegelerfassungsmittel der Entleerungsleitung (5) auf die Pumpleitung eines Sammelfahrzeugs für gebrauchtes Speiseöl verlagert sind.

11. Sammelbehälter für gebrauchtes Speiseöl nach einem der Ansprüche 1 bis 10, **dadurch gekennzeichnet, dass** die Heizmittel (4) zumindest eine Einheit aus zumindest zwei Heizelementen enthalten, die abnehmbar in einer im wesentlichen parallel zum Wannenboden verlaufenden Ebene montiert ist.

12. Sammelbehälter für gebrauchtes Speiseöl nach Anspruch 11, **dadurch gekennzeichnet, dass** jedes Heizelement (4) einen optischen und/oder einen akustischen Fehlfunktionsanzeiger und/oder einen Anzeiger enthält, der einem entfernt liegenden Kontrollterminal über eine Kommunikationsverbindung ein die Fehlfunktion des Heizelements darstellendes Signal zuführt.

13. Sammelbehälter für gebrauchtes Speiseöl nach einem der Ansprüche 1 bis 12, **dadurch gekennzeichnet, dass** die Oberseite der Wanne (1) zumindest ein Lüftungsloch (111) enthält, das mit einem Geruchsfilter verschlossen ist.

14. Sammelbehälter für gebrauchtes Speiseöl nach einem der Ansprüche 1 bis 12, **dadurch gekennzeichnet, dass** der Boden (10) der Wanne (1) eine Vertiefung (101) enthält, die ein Gefäß bildet, in das das freie Ende (52) der Ablassleitung (5) eintaucht, so dass beim Ablassen sämtliches in der Wanne (1) enthaltenes Fluid abgesaugt wird, abgesehen von der vernachlässigbaren, in der Vertiefung (101) verbleibenden Restmenge.

15. Sammelbehälter für gebrauchtes Speiseöl nach einem der Ansprüche 1 bis 14, **dadurch gekennzeichnet, dass** die Steuermittel einen manuellen Schalter enthalten, der von einer Bedienperson zu betätigen ist.

16. Sammelbehälter für gebrauchtes Speiseöl nach einem der Ansprüche 1 bis 14, **dadurch gekennzeichnet, dass** die Steuermittel einen Schalter enthalten, der über eine Kommunikationsverbindung mit einer Ölaufbereitungszentrale ferngesteuert wird.

17. Sammelbehälter für gebrauchtes Speiseöl nach einem der Ansprüche 1 bis 16, **dadurch gekennzeichnet, dass** die Wanne Temperaturmessmittel mit einer Anzeigevorrichtung enthält, die an einem sichtbaren Außenbereich der Wanne angeordnet ist und/oder einem entfernt liegenden Kontrollterminal über eine Kommunikationsverbindung eine die Temperatur darstellende Information übermittelt.

18. Sammelbehälter für gebrauchtes Speiseöl nach einem der Ansprüche 1 bis 17, **dadurch gekennzeichnet, dass** die Wanne (1) Mittel zur Kommunikation mit einer Ölaufbereitungszentrale enthält, wobei die Kommunikationsmittel mit Mitteln zum Auslösen der Heizmittel oder mit den Heizmitteln oder mit den Ölpegelerfassungsmitteln oder mit den Öltemperaturerfassungsmitteln oder mit den Mitteln zum Ablassen des Nebenbeckens oder mit einer Kombination dieser Teile verbunden sind, um Signale zu empfangen, die entweder den Funktionszustand eines jeden Mittels oder den Ölpegel- und Öltemperaturwert in der Wanne oder eine Kombination dieser Teile darstellen.

19. Sammelbehälter für gebrauchtes Speiseöl nach einem der Ansprüche 1 bis 18, **dadurch gekennzeichnet, dass** der Boden (10) der Wanne (1) mehrere Tragfüße (102) enthält, die über die Länge und über die Breite der Wanne (1) so beabstandet sind, dass sie die Verlagerung der Wanne über konventionelle Hebemittel entweder in Richtung der Länge oder in Richtung der Breite gestatten, so dass sie die Verlagerung und das Einsetzen der Wanne (1) innerhalb eines Gebäudes erleichtern.

20. Sammelbehälter für gebrauchtes Speiseöl nach einem der Ansprüche 1 bis 17, **dadurch gekennzeichnet, dass** die Oberseite (11) der Wanne (1) eine Öffnung (110) enthält, die von einem Deckel verschlossen ist, der den Zugang einer Bedienperson zum Inneren der Wanne (1) zwecks Wartung gestattet.

21. Sammelbehälter für gebrauchtes Speiseöl nach einem der Ansprüche 1 bis 20, **dadurch gekennzeichnet, dass** der Boden (10) der Wanne (1) zumindest eine Abführleitung enthält.

22. Sammelbehälter für gebrauchtes Speiseöl nach einem der Ansprüche 1 bis 21, **dadurch gekennzeichnet, dass** das außerhalb der Wanne liegende Ende (51) der Entleerungsleitung einen Verbinder mit einer bestimmten, nicht standardmäßigen Form enthält, der eine spezifische und kennzeichnende Verbindung mit einem Sammelfahrzeug für gebrauchtes Speiseöl gestattet, um im Nachlauf die Rückverfolgbarkeit des Öls zu gewährleisten.

23. Sammelbehälter für gebrauchtes Speiseöl nach einem der Ansprüche 1 bis 22, **dadurch gekennzeichnet, dass** die Heizmittel Sicherheitsmittel mit einer Uhr enthalten, die ausgelöst wird, sobald die Heizmittel angeschaltet werden, wobei die Uhr mit den Auslösemitteln so verbunden ist, dass die Heizmittel nach einer bestimmten, von der Uhr angegebenen Zeitdauer abgeschaltet werden, die zumindest der Zeitdauer entspricht, die erforderlich ist, um das in der Wanne enthaltene Öl zu verflüssigen, so dass mit dem bestimmten ersten Zeitpunkt ein verlängertes Erhitzen des Öls verhindert wird.

24. Sammelbehälter für gebrauchtes Speiseöl nach einem der Ansprüche 1 bis 23, **dadurch gekennzeichnet, dass** die Oberseite der Wanne (1) abnehmbar ist.

25. Sammelbehälter nach einem der vorangehenden Ansprüche, **dadurch gekennzeichnet, dass** er ein Gefäß (13) enthält, das eine von außerhalb der Wanne zugängliche Öffnung aufweist, wobei dieses Gefäß ein Ende einer Füllleitung (31) so aufnehmen kann, dass die zwischen zwei Anwendungen der Füllleitung von diesem Ende abfließbare Restflüssigkeit ist diesem selben Gefäß aufgefangen wird.

26. Sammelbehälter nach Anspruch 25, **dadurch gekennzeichnet, dass** das Gefäß (13) an der Wanne (1) so befestigt ist, dass es bequem abnehmbar ist, um es separat reinigen zu können.

27. Sammelbehälter nach einem der vorangehenden Ansprüche, **dadurch gekennzeichnet, dass** er eine beheizte Leitung (33) enthält, die auf einer Seite an den Saugeinlass (32') einer Pumpe (3) oder an die Füllleitung (30) und auf der anderen Seite an Entleerungs- oder Abführmitteln zumindest eines Geräts (F) angeschlossen ist, das ein Speisekochöl verwendet, wobei diese Leitung Heizmittel enthält, die es ermöglichen, das innerhalb dieser Leitung fließende oder verbleibende Öl flüssig zu halten oder zu verflüssigen.

28. Sammelbehälter nach Anspruch 27, **dadurch gekennzeichnet, dass** die Heizmittel der beheizten Leitung (33) einen Heizwiderstandsdraht enthalten, der über die Länge dieser Leitung anliegt und gegenüber einer maximalen Temperatur des Öls beständig ist, das in der genannten Leitung fließen kann.

29. Sammelbehälter nach einem der vorangehenden Ansprüche, **dadurch gekennzeichnet, dass** die Steuer- und Kontrollmittel einen Schalter enthalten, der über ein Steuer- bzw. Kontrollmodul (102) gesteuert wird, von der Wanne (1) entfernt liegt und mit dieser über eine drahtliche oder drahtfreie Übertragung kommuniziert.

30. Sammelbehälter nach einem der vorangehenden Ansprüche, **dadurch gekennzeichnet, dass** er zumindest ein bewegliches, sogenanntes Nebenbecken (2) enthält, das eine Wanne (201) aufweist, die mit einer Füllöffnung (23) und einer Saugleitung (22) versehen ist, die über eine flexible oder bewegliche Leitung (31, 31') abnehmbar mit der Wanne (1) verbunden ist oder oberhalb einer Öffnung ausmündet, die zur Wanne (1) führt.

31. Sammelbehälter nach Anspruch 30, **dadurch gekennzeichnet, dass** die Füllöffnung (23) des Nebenbeckens (2) Verbindungsmittel enthält, die statisch oder dynamisch dicht sind und mit Schließmitteln zusammenwirken können, um ein Verschütten von Öl bei Stößen während des Transports auch bei maximaler Öltemperatur zu vermeiden.

32. Sammelbehälter nach Anspruch 30 oder 31, **dadurch gekennzeichnet, dass** das Nebenbecken (2) auf zumindest drei Rädern (24) aufliegt, die so angeordnet sind, dass sie eine dauerhafte Stabilität gewährleisten, wobei die Abmessungen und die Stellung dieser Räder eine Bodenfreiheit (H) gewährleisten, die im größten Bereich des Nebenbeckens höher als 6 cm ist.

33. Vorrichtung nach einem der Ansprüche 30 bis 32, **dadurch gekennzeichnet, dass** der die Füllöffnung (23) enthaltende Bereich des Nebenbeckens (2) eine Breite (L2) aufweist, die geringer als die maximale Breite (L1) dieses Sammelbehälters ist, wobei diese Breite (L2) der minimalen Abmessung des unter einer Friteuse vorhandenen Freiraums ist.

34. Sammelbehälter nach einem der Ansprüche 30 bis 33, **dadurch gekennzeichnet, dass** die Saugleitung (22) des Nebenbeckens (2) eine Hand- oder Motorablasspumpe (3') enthält, die den Inhalt dieses Beckens (2) ansaugt und über die flexible oder bewegliche Leitung (31, 31') in die Wanne (1) fördert.

35. Sammelbehälter nach einem der Ansprüche 30 bis 34, **dadurch gekennzeichnet, dass** er eine Hand- oder Motorpumpe (3) enthält, die über die flexible oder bewegliche Leitung (31, 31') im Nebenbecken (2) ansaugt und in die Wanne (1) fördert.

36. Sammelbehälter nach einem der Ansprüche 30 bis 35, **dadurch gekennzeichnet, dass** die Füllöffnung (23) des Nebenbeckens (2) zumindest ein abnehmbares Filterelement (231) enthält, das feste Teilchen zurückhalten kann, die größer sind als ein bestimmtes Maß.

37. Sammelbehälter nach Anspruch 36, **dadurch gekennzeichnet, dass** das Filterelement (231) der Füllöffnung (23) des Nebenbeckens (2) über Verriegelungsmittel so festgehalten wird, dass seine Herausnahme durch eine nicht autorisierte Person unterbunden wird.

38. Sammelbehälter nach einem der Ansprüche 30 bis 37, **dadurch gekennzeichnet, dass** die Saugleitung (22) des Nebenbeckens (2) in dichter Weise mit einer Öffnung verbunden ist, die sich an einer Wand seiner Wanne (201) befindet und an einem unteren Punkt des Innenraums des genannten Nebenbeckens so ausmündet, dass sie ein Entfernen mittels Schwerkraft ermöglicht.

## Claims

1. Container for recovering used edible oil, comprising a closed tank (1) of a given volume comprising, on the top (11), a filling pipe (30) for the used oil, a pipe (5) for draining the oil by suction, one end (52) of the drainage pipe being located near the bottom (10) of the tank (1), the tank (1) also comprising, near the bottom (10), heating means (4) for bringing the oil to a temperature above its solidification temperature, the container being **characterised by** means for controlling the heating means capable of allowing the triggering of the latter at a first given moment depending on a second given moment chosen for the drainage, so that the oil stored in the tank is sufficiently liquid to effect the drainage by suction.

2. Container for recovering used edible oil according to Claim 1, **characterised in that** the tank (1) comprises means (6) for detecting the level and/or presence of oil transmitting to the control means a signal representing the oil level, so that the heating means are started up only when a minimum level (NH) of oil is present in the tank (1) and when the control means are activated.

3. Container for recovering used edible oil according to Claim 2, **characterised in that** the oil level detection means comprise alarm means (60) triggered when at least a first maximum level (N2) of oil is reached.

4. Container for recovering used edible oil according to one of Claims 2 or 3, **characterised in that** the tank (1) comprises a removable vat (2), described as secondary, comprising an opening in its upper part and drainage means (3, 22, 31') connected to the top of the tank (1) via a discharge pipe (30'), the secondary vat (2) also comprising oil level detection means transmitting a signal representing the oil level, so that the drainage means (3, 22, 31') are triggered as soon as a minimum level of oil is detected in the vat (2).

5. Container for recovering used edible oil according to one of Claims 2 or 3, **characterised in that** the tank (1) comprises a removable vat (2), described as secondary, comprising an opening in its upper part and drainage means (3, 22, 31') connected to the top of the tank (1) via a discharge pipe (30'), the secondary vat (2) also comprising presence detection means transmitting a signal representing the presence of oil, so that the drainage means (3, 22, 31') are triggered as soon as the presence of oil is detected in the vat (2).

6. Container for recovering used edible oil according to one of Claims 1 to 5, **characterised in that** the tank (1) comprises means for regulating the temperature of the heating means in order to maintain the temperature of the oil at a temperature higher by about 15°C than the solidification temperature, with an error of + or - 5°C.

7. Container for recovering used edible oil according to Claim 2, **characterised in that** the level detection means comprise a float (6) connected to a mechanical (60) or electronic (100) device with an external display.

8. Container for recovering used edible oil according to Claim 2 or 7, **characterised in that** the level detection means comprise an ultrasound or microwave-frequency detection device supplying a signal representing the level, either to a display device located on a visible outer part of the tank, or to a remote monitoring terminal via a communication link.

9. Container for recovering used edible oil according to one of Claims 2, 7 or 8, **characterised in that** the level detection means comprise, on the filling pipe (30) and the drainage pipe (5), on the one hand a fluid volume measurement device comprising a flow meter and on the other hand a calculator connected to the two volume measurement devices in order to receive signals representing the quantity of oil entering and leaving the tank (1) so as to calculate the difference between these two quantities in order to determine the quantity of oil present in the tank and to ensure downstream traceability of the used edible oil.

10. Container for recovering used edible oil according to Claim 9, **characterised in that** the level detection means of the drainage pipe (5) are off-set to the pumping pipe of a vehicle for collecting the used edible oil.

11. Container for recovering used edible oil according to one of Claims 1 to 10, **characterised in that** the heating means (4) comprise at least one assembly of at least two heating elements mounted removably in a plane substantially parallel to the bottom of the tank.

12. Container for recovering used edible oil according to Claim 11, **characterised in that** each heating element (4) comprises a visual malfunction indicator and/or an audible malfunction indicator and/or an indicator supplying a signal representing the malfunction of the heating element to a remote monitoring terminal via a communication link.

13. Container for recovering used edible oil according to one of Claims 1 to 12, **characterised in that** the top of the tank (1) comprises at least one vent (111) sealed by an odour filter.

14. Container for recovering used edible oil according to one of Claims 1 to 13, **characterised in that** the bottom (10) of the tank (1) comprises a boss (101) forming a receptacle into which the free end (52) of the drainage pipe (5) dips, so that at the time of the drainage operation all the fluid contained in the tank (1), apart from the negligible quantity remaining in the boss (101), is sucked out.

15. Container for recovering used edible oil according to one of Claims 1 to 14, **characterised in that** the control means comprise a manual switch that can be actuated by an operator.

16. Container for recovering used edible oil according to one of Claims 1 to 14, **characterised in that** the control means comprise a switch controlled remotely via a communication link to an oil recycling centre.

17. Container for recovering used edible oil according to one of Claims 1 to 16, **characterised in that** the tank comprises temperature measurement means comprising a display device arranged on an external, visible part of the tank and/or transmitting information representing the temperature to a remote monitoring terminal via a communication link.

18. Container for recovering used edible oil according to one of Claims 1 to 17, **characterised in that** the tank (1) comprises means for communicating with an oil recycling centre, the communication means being connected to the means for triggering the heating means or to the heating means or to the oil level detection means or to the oil temperature measurement means or to the means for draining the secondary vat or to a combination of these elements, in order to receive signals representing either the operating status of each of the means or the value of the level and temperature of oil in the vat, or a combination of these elements.

19. Container for recovering used edible oil according to one of Claims 1 to 18, **characterised in that** the bottom (10) of the tank (1) comprises a plurality of support feet (102) spaced out over the length and width of the tank (1) so as to allow the tank to be displaced by conventional lifting means, either lengthwise or widthwise, in order to facilitate the displacement and installation of the tank (1) inside a building.

20. Container for recovering used edible oil according to one of Claims 1 to 17, **characterised in that** the top (11) of the tank (1) comprises an opening (110) closed by a lid giving an operator access to the inside of the tank (1) for maintenance.

21. Container for recovering used edible oil according to one of Claims 1 to 20, **characterised in that** the bottom (10) of the tank (1) comprises at least one discharge pipe.

22. Container for recovering used edible oil according to one of Claims 1 to 21, **characterised in that** the end (51) of the drainage pipe located outside the tank comprises a connector with a predetermined non-standard shape allowing a specific, identified connection with a vehicle for collecting used edible oil in order to guarantee the downstream traceability of the oil.

23. Container for recovering used edible oil according to one of Claims 1 to 22, **characterised in that** the heating means comprise safety means containing a clock that is triggered as soon as the heating means are switched on, the clock is connected to the triggering means so that the heating means are switched off after a given period indicated by the clock, corresponding at least to the period needed to liquefy the oil contained in the tank, in order to prevent prolonged heating of the oil with the first given moment.

24. Container for recovering used edible oil according to one of Claims 1 to 23, **characterised in that** the top of the tank (1) is removable.

25. Container according to one of the preceding claims, **characterised in that** it comprises a receptacle (13) having an opening accessible from outside the tank, this receptacle being capable of receiving one end of a filling pipe (31), so that the liquid residues that can run from this end between two uses of the filling pipe are collected by this same receptacle.

26. Container according to Claim 25, **characterised in that** the receptacle (13) is fixed to the tank (1) in an easily removable way so as to be able to be cleaned separately.

27. Container according to one of the preceding claims, **characterised in that** it comprises a heated pipe (33) connected on one side to the suction inlet (32') of a pump (3) or to the filling pipe (30) and on the other side to drainage or discharge means of at least one piece of apparatus (F) using an edible cooking oil, this pipe comprising heating means making it possible to keep liquid, or to liquefy, the oil circulating or remaining inside this same pipe.

28. Container according to Claim 27, **characterised in that** the heating means of the heating pipe (33) comprise a resistive heating wire applied over the length of this same pipe and resistant to the maximum temperature of the oil that can circulate in said pipe.

29. Container according to one of the preceding claims, **characterised in that** the control and monitoring means comprise a switch controlled by a control or monitoring module (103), remote from the tank (1) and communicating therewith by wired or wireless transmission.

30. Container according to one of the preceding claims, **characterised in that** it comprises at least one movable vat (2) described as secondary, comprising a tank (201) provided with a filling opening (23) and a suction pipe (22) connected removably to the tank (1), by a flexible or movable pipe (31, 31'), or opening out above an opening leading to the tank (1).

31. Container according to Claim 30, **characterised in that** the filling opening (23) of the secondary vat (2) comprises connection means, statically or dynamically fluid-tight, capable of cooperating with closing means, in order to avoid oil spills when there are jolts during transport, even at the maximum temperature of the oil.

32. Container according to one of Claims 30 or 31, **characterised in that** the secondary vat (2) rests on at least three wheels (24) arranged so as to ensure permanent stability, the dimensions and position of these wheels ensuring more than six centimetres ground clearance (H) for most of the secondary vat.

33. Device according to one of Claims 30 to 32, **characterised in that** the part of the secondary vat (2) that comprises the filling opening (23) has a width (L2) less than the maximum width (L1) of this same container, this width (L2) corresponding to the minimum dimension of the space made available under a fryer.

34. Container according to one of Claims 30 to 33, **characterised in that** the suction pipe (22) of the secondary vat (2) comprises a manual or motorised drainage pump (3') sucking out the content of this vat (2) and driving back into the tank (1) via the flexible or movable pipe (31, 31').

35. Container according to one of Claims 30 to 34, **characterised in that** it comprises a manual or motorised pump (3) sucking into the secondary vat (2) via the flexible or movable pipe (31, 31') and driving back into the tank (1).

36. Container according to one of Claims 30 to 35, **characterised in that** the filling opening (23) of the secondary vat (2) comprises at least one removable filtering element (231) capable of retaining solid particles larger than a given dimension.

37. Container according to Claim 36, **characterised in that** the filtering element (231) of the filling opening (23) of the secondary vat (2) is held by locking means in order to prevent it from being removed by an unauthorised person.

38. Device according to one of Claims 30 to 37, **characterised in that** the suction pipe (22) of the secondary vat (2) is connected in a fluid-tight manner to an opening located on one wall of its tank (201) and opening at a low point of the inner space of said secondary vat, in order to allow drainage by gravity.
